(19) Europäisches Patentamt / European Patent Office / Office européen des brevets

(11) **EP 2 510 643 B1**

(12) **EUROPÄISCHE PATENTSCHRIFT**

(45) Veröffentlichungstag und Bekanntmachung des Hinweises auf die Patenterteilung:
**03.07.2019   Patentblatt 2019/27**

(51) Int Cl.:
*H04L 1/02* (2006.01)      *H04L 1/00* (2006.01)
*H04L 1/06* (2006.01)      *H04W 24/00* (2009.01)
*H04L 25/02* (2006.01)

(21) Anmeldenummer: **10800940.8**

(22) Anmeldetag: **27.12.2010**

(86) Internationale Anmeldenummer:
**PCT/EP2010/070752**

(87) Internationale Veröffentlichungsnummer:
**WO 2011/083061 (14.07.2011 Gazette 2011/28)**

(54) **FUNKTIONSVARIABLENWERTSENDER, FUNKTIONSEMPFÄNGER UND SYSTEM IN SENSOR-NETZWERKE**

FUNCTIONAL VARIABLE VALUE TRANSMITTER, FUNCTIONAL RECEIVER, AND SYSTEM IN SENSOR NETWORKS

ÉMETTEUR DE VALEURS DE VARIABLES DE FONCTIONS, RÉCEPTEUR DE FONCTIONS ET SYSTÈME DANS DES RÉSEAUX DE CAPTEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.01.2010   DE 102010000735**

(43) Veröffentlichungstag der Anmeldung:
**17.10.2012   Patentblatt 2012/42**

(73) Patentinhaber: **Fraunhofer-Gesellschaft zur Förderung der angewandten Forschung e.V. 80686 München (DE)**

(72) Erfinder:
• **STANCZAK, Slawomir**
  **10551 Berlin (DE)**
• **GOLDENBAUM, Mario**
  **10589 Berlin (DE)**

(74) Vertreter: **Schenk, Markus et al**
  **Schoppe, Zimmermann, Stöckeler**
  **Zinkler, Schenk & Partner mbB**
  **Patentanwälte**
  **Radlkoferstrasse 2**
  **81373 München (DE)**

(56) Entgegenhaltungen:
• **HABIB SENOL ET AL: "Performance of Distributed Estimation Over Unknown Parallel Fading Channels", IEEE TRANSACTIONS ON SIGNAL PROCESSING, IEEE SERVICE CENTER, NEW YORK, NY, US, Bd. 55, Nr. 12, 1. Dezember 2008 (2008-12-01), Seiten 6057-6068, XP011237819, ISSN: 1053-587X**
• **MARIO GOLDENBAUM ET AL: "On Function Computation via Wireless Sensor Multiple-Access Channels", WIRELESS COMMUNICATIONS AND NETWORKING CONFERENCE, 2009. WCNC 2009. IEEE, IEEE, PISCATAWAY, NJ, USA, 5. April 2009 (2009-04-05), Seiten 1-6, XP031454337, ISBN: 978-1-4244-2947-9 in der Anmeldung erwähnt**
• **ANTHONY D SMITH ET AL: "Distributed estimation over fading macs with multiple antennas at the fusion center", SIGNALS, SYSTEMS AND COMPUTERS, 2009 CONFERENCE RECORD OF THE FORTY-THIRD ASILOMAR CONFERENCE ON, IEEE, PISCATAWAY, NJ, USA, 1. November 2009 (2009-11-01), Seiten 424-428, XP031679404, ISBN: 978-1-4244-5825-7**

• **SIMON YIU ET AL: "Nonorthogonal Transmission and Noncoherent Fusion of Censored Decisions", IEEE TRANSACTIONS ON VEHICULAR TECHNOLOGY, IEEE SERVICE CENTER, PISCATAWAY, NJ, US, Bd. 58, Nr. 1, 1. Januar 2009 (2009-01-01) , Seiten 263-273, XP011226372, ISSN: 0018-9545, DOI: DOI:10.1109/TVT.2008.923659**

**Beschreibung**

Die vorliegende Erfindung bezieht sich auf einen Funktionsvariablenwert-Sender, einen Funktionsempfänger und entsprechende Systeme aus denselben, wie z. B. Sensornetzwerke.

Moderne drahtlose "Sensornetzwerke" bestehen aus einer sehr großen Anzahl günstiger Baugruppen bzw. Sensorknoten, die über eine drahtlose Kommunikationsschnittstelle miteinander vernetzt sind. Durch den Drahtlosnetzwerkgedanken unterscheiden sie sich erheblich von einer bloßen Ansammlung von Sensoren, da die damit verbundenen Fähigkeiten zur Kooperation, Koordination und Kollaboration den Anwendungsradius immens erweitern.

Im Vergleich zu konventionellen Datennetzwerken, wie z. B. dem Internet, deren primäre Aufgabe darin besteht, einen Ende-zu-Ende-Informationsverkehr bereitzustellen, sind Sensornetzwerke in aller Regel sehr stark anwendungsspezifisch, was bedeutet, dass sie explizit entwickelt und eingesetzt werden, um spezielle Aufgaben zu erfüllen. Als Beispiele seien hier exemplarisch die Umgebungsüberwachung, die Beobachtung physikalischer Phänomene, die Gebäudesicherheit, die Qualitätssicherung usw. genannt. Diese anwendungsgetriebene Eigenschaft drahtloser Sensornetzwerke erfordert im Vergleich zu den erwähnten konventionellen Datennetzen völlig neue Designparadigmen.

In vielen Sensornetzwerkanwendungen ist ein ausgezeichneter Empfangsknoten (engl. Access Point) - auch manchmal als Sammelknoten oder zentrale Prozessoreinheit bezeichnet - nicht daran interessiert, die einzelnen Messwerte der im Netz befindlichen Knoten zu rekonstruieren, sondern er ist häufig an einer gewünschten Funktion $f$ interessiert, die in linearer oder nicht linearer Art und Weise entweder von der Gesamtheit aller Messwerte abhängt, oder aber von einer spezifizierten Teilmenge. Gewünschte Funktionen können z.B. der arithmetische Mittelwert, der geometrische Mittelwert, der maximale Messwert, der minimale Messwert, der harmonische Mittelwert, eine gewichtete Summe der Messdaten, eine Anzahl der im Netz aktiven Sensorknoten usw. sein.

Es wäre also wünschenswert, gewünschte lineare und nichtlineare Funktionen in drahtlosen Sensornetzwerken mit möglichst geringem Energieaufwand für eine erhöhte Netzlebenszeit, stark reduzierter Komplexität, möglichst wenig Koordination und mit einfachem Implementierungsaufwand zu berechnen.

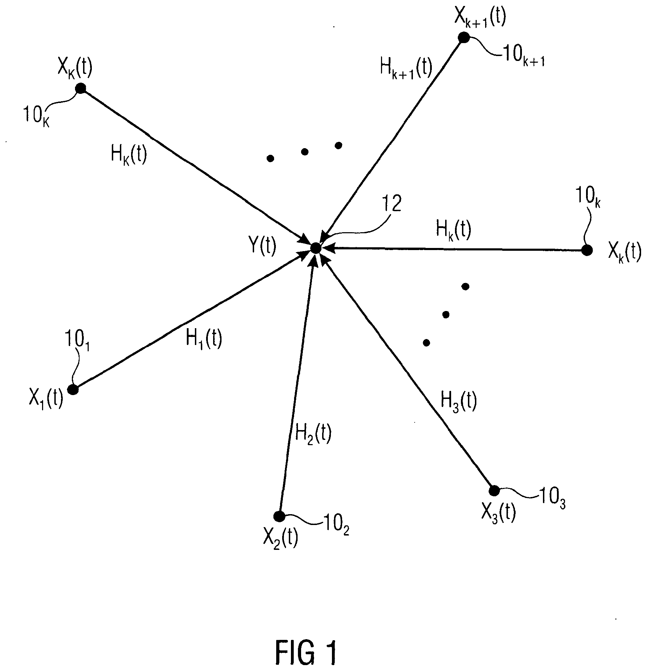

In anderen Worten ausgedrückt, besteht ein Problem darin, Funktionsvariablenwerte, die an Funktionsvariablenwert-Sendern entstehen, möglichst effektiv an einen Funktionsempfänger zu übertragen. Anhand von Fig. 1 sei das Problem noch einmal veranschaulicht. Fig. 1 zeigt exemplarisch ein Sensornetzwerk mit Sensorknoten $10_1$, $10_2$, $10_3$,...,$10_k$,$10_{k+1}$,...,$10_K$ sowie einem Empfangsknoten 12. Gemäß dem Sensornetzwerkbeispiel von Fig. 1 sind die $K$ Sensorknoten $10_1$ ... $10_K$ räumlich um den ausgezeichneten Empfangsknoten 12 verteilt angeordnet. Aufgabe des Sensornetzwerkes ist es, am Ort des Empfangsknotens die Funktion $f(X_1(t),..., X_K(t))$, wobei $X_1(t),..., X_K(t)$ die zum Zeitpunkt $t$ gemessenen Werte der einzelnen Sensoren repräsentieren, zuverlässig zu berechnen.

Um das Problem der Funktionswertberechnung adäquat zu lösen, ist es möglich, in dem drahtlosen Sensornetzwerk von Fig. 1 die Prozesse der "Messwertübertragung" bzw. die Übertragung der Funktionsvariablenwerte zum Empfänger auf der einen Seite und der "Funktionswertberechnung" auf der anderen Seite streng voneinander zu trennen. Das bedeutete, dass jeder Sensorknoten $10_1$...,$10_K$ seine Messwertinformation beispielsweise quantisierte und gesondert als digitalen Bitstrom zum Empfangsknoten 12 übertragen würde. Dieser rekonstruierte dann aus den einzelnen Empfangssignalen den entsprechenden Messwert und berechnete anschließend in einem beispielsweise intern vorhandenen Mikroprozessor die gewünschte Funktion.

Die inhärente Eigenschaft eines jeden drahtlosen Kanals ist allerdings das Auftreten von Interferenz, sobald unterschiedliche Nutzer gleichzeitig auf gemeinsame Ressourcen, wie etwa Bandbreite und/oder Sendezeitpunkt, zugreifen. Eine Trennung der Signale am Empfangsknoten lässt sich dann in der Regel nur mit großem Aufwand realisieren oder aber ist gar nicht möglich. Um diesem Umstand Rechnung zu tragen, ist es in drahtlosen Sensornetzwerken wie demjenigen von Fig. 1 möglich, "orthogonalisierende" Verfahren, wie z.B. TDMA (Time Division Multiple Access) bzw. Zeitmultiplex-Verfahren einzusetzen, wonach jedem einzelnen Sensorknoten $10_1$-$10_K$ eine gewisse Sendezeit zur Verfügung gestellt werden würde, in der die bestehenden Ressourcen ausschließlich von ihm genutzt werden können. Es ist offensichtlich, dass ein solcher Ansatz ein hohes Maß an Koordination erfordert, damit sichergestellt werden kann, dass jeder Knoten $10_1$-$10_K$ adressiert wird, ihm mitgeteilt wird, wann er welchen Zeitschlitz zugewiesen bekommt usw. Die Koordination müsste dabei von einer konkreten Protokollstruktur übernommen werden, die durch entsprechenden Zusatzaufwand, wie z.B. Signalisierungsmitteilungen, Bestätigungssignale usw., für die Zuweisung und Zeitsynchronisation sorgen würde. Ein solches Vorgehen reduziert aber die Flexibilität und Lebensdauer eines Sensornetzes um ein Vielfaches und ist deshalb im Kontext der Funktionswertberechnung in höchstem Maße suboptimal. Hinzu kommt, dass die Übertragungseigenschaften drahtloser Kanäle starken zeitabhängigen Schwankungen unterworfen sein können, die auch als Fading bezeichnet werden, und die eine Kanalschätzung an dem jeweiligen Signalempfänger oder aber sogar an dem Signalsender selbst notwendig machen, um eine adäquate und zuverlässige Signalübertragung zu ermöglichen. Dieses Vorgehen erzeugt zusätzlichen Aufwand und damit verbunden natürlich auch einen signifikanten Energieverbrauch, der gerade in Sensornetzen mit einer sehr großen Anzahl an Knoten einen essentiellen Einfluss auf die Netzlebenszeit ausübt.

Ein weiterer Nachteil der strikten Trennung zwischen Funktionsvariablenwert-Übertragung gemäß TDMA auf

der einen und eigentlicher Funktionsergebnisberechnung auf der anderen Seite ist die hinsichtlich der Funktionswertberechnung stark eingeschränkte Datenrate. Das bedeutet, das bei einer einheitlichen Quantisierung jedes einzelnen der $K$ Messwerte mit $Q$ Bits die Empfangsknoten höchstens alle $Q \cdot K$ Zeitschlitze einen Funktionswert aus den rekonstruierten Daten berechnen können, weshalb gerade für große Netzwerke, bei denen $K$ groß ist und/oder in dem Fall einer feinen Auflösung, d.h. $Q$ groß ist, die Wartezyklen signifikant sind. Bei Vorhandensein einer konkreten Protokollstruktur, wie z.B. IEEE Standard 802.15.4, sind sogar $(Q+R)K$ Zeitschlitze notwendig, wobei $R$ die Anzahl der Bits beschreibt, die in jedem Zeitschlitz durch den Overhead des Protokolls induziert werden. Folglich kann der Empfangsknoten nur alle $(Q+R)K$ Zeitschlitze einen neuen Funktionswert anfordern, was gerade in zeitkritischen Anwendungen oder Alarmsituationen einen stark limitierenden Faktor darstellt.

Informationstheoretische Untersuchungen in B. Nazer und M. Gastpar, "Computation over multiple-access channels," IEEE Trans. Inf. Theory, Bd. 53, Nr. 10, S. 3498-3516, Okt. 2007, haben jedoch gezeigt, dass unter der strengen Annahme perfekter Synchronisation und perfekter Kanalinformation an Sensorknoten die Interferenzeigenschaft von Vielfachzugriffskanälen explizit für die Berechnung linearer Funktionen ausgenutzt werden kann. Insbesondere schlägt diese Druckschrift vor, digitale Funktionsvariablenwerte bit- bzw. ziffernweise gleichzeitig an den Empfangsknoten zu übertragen, und dabei die Eigenschaften des Mehrfachzugriffskanals an der interessierenden Berechnung der Linearkombination der Funktionsvariablenwerte zu beteiligen. Die inhärente Eigenschaft bzw. das mathematische Verhalten des Vielfachzugriffskanals, das dort ausgenutzt wird, besteht in der Bildung einer Linearkombination bzw. Summenbildung der gleichzeitig gesendeten komplexwertigen Sendesymbole $R_{kq}(t)$, $k = 1,..., K$; $q = 1,..., Q$, die durch Quantisierung aus den Messdaten $X_k(t)$ entstanden sind, also $Q(X_k(t)) = (R_{k1}(t),...,R_{kQ}(t))$ für alle $k$, wobei $Q$ einen beliebigen abstrakten Quantisierungsoperator beschreibt. Der Ausgang des drahtlosen Vielfachzugriffskanals unter der Annahme der perfekten Synchronisation zwischen Sensorknoten hat die explizite Form

$$Y_q(t) = \sum_{k=1}^{K} H_{kq}(t) R_{kq}(t) + N_q(t), \, q = 1,...,Q, \qquad (1)$$

wobei $H_{kq}(t)$ den komplexen Kanaleinfluss (Fading-Koeffizienten) zwischen dem $k$-ten Sensor und dem Empfangsknoten während der Übertragung des $q$-ten Symbols beschreibt und $N_q(t)$ komplexes additives Empfängerrauschen bezeichnet. Gl. (1) präzisiert noch einmal mathematisch das bereits oben erwähnte Verhalten des Vielfachzugriffskanals, nämlich die Bildung einer Linearkombination (Summenbildung). Dabei ist zu bemerken, dass $q$ einen diskreten Zeitparameter darstellt, der nicht mit dem Erregungszeitpunkt $t$ zu verwechseln ist.

Die Idee von Nazer und Gastpar nutzt also die Summeneigenschaft (1) für die Berechnung linearer Funktionen unter der Voraussetzung einer gewissen Übereinstimmung zwischen dem Verhalten des Vielfachzugriffskanals (1) und der gewünschten Funktion $f(X_1(t) ...., X_K(t))$. Da in diesem Kontext keine Schritte gegen den Interferenzeinfluss des Kanals unternommen werden müssen, kann im Idealfall und im Gegensatz zum TDMA-Beispiel, das zuvor beschrieben worden ist, alle $Q$ Zeitschlitze ein neuer Funktionswert vom Zugriffspunkt initiiert werden.

Die rein informationstheoretischen Überlegungen von Nazer und Gastpar haben jedoch einen entscheidenden Nachteil, nämlich die Annahme der perfekten Synchronisation zwischen Sensorknoten, die vor allem in großen Netzwerken gar nicht oder nur mit unverhältnismäßig hohem Aufwand realisiert werden kann. Deshalb wurde in M. Goldenbaum, S. Stanczak und M. Kaliszan, "On function computation via wireless sensor multiple-access channels," in Proc. IEEE Wireless Communications & Networking Conference (WCNC), Budapest, Hungary, Apr. 2009 ein Verfahren vorgestellt, das vollständig ohne explizite Protokollstruktur auskommt und zudem nur grobe Synchronisationsanforderungen an das System stellt. Im Gegensatz zu Nazer und Gastpar bestand die Idee in letztgenanntem Artikel darin, jeden Sensorknoten eine unterschiedliche Sequenz von komplexen Werten der Länge $M \in N$ mit einer Übertragungsleistung übertragen zu lassen, die von den gemessenen Sensordaten abhängt. Unter bestimmten Bedingungen addieren sich dann die Leistungen der $K$ Sequenzen während der Übertragung über den Mehrfachzugriffkanal auf, so dass sich alles, was der Empfangsknoten tun muss, darin erschöpft, die empfangene Empfangsleistung zu bestimmen und einige simple arithmetische Berechnungen durchzuführen. Für die Umsetzung wird vorgeschlagen, als die Sequenzen von komplexen Werten, deren Sendeleistung gemäß dem zu übertragenden Funktionsvariablenwert eingestellt wird, einheitsnormierte Sequenzen von Zufallsphasen mit konstantem Betrag zu verwenden. Die Synchronisation ist deshalb bedeutend weniger kritisch als bei Nazer und Gastpar. Allerdings geht dieser Ansatz ebenfalls von der perfekten Kenntnis der komplexen Kanalkoeffizienten aus, die den Kanaleinfluss zwischen dem jeweiligen Sensorknoten und dem Empfangsknoten beschreiben. Obwohl also die Synchronisationsaufgaben weniger kritisch sind als bei Nazer und Gastpar, verbleibt auch nach dem letzten Lösungsansatz der hohe Aufwand zur perfekten Schätzung des komplexen Kanaleinflusses zwischen den Sendern und dem Empfänger, welcher Einfluss sich in erhöhtem Leistungsaufwand zur Kanalschätzung sowie in reduzierter Funktionsergebnisrate niederschlägt.

Die HABIB SENOL ET AL: "Performance of Distributed Estimation Over Unknown Parallel Fading Channels", IEEE TRANSACTIONS ON SIGNAL PROCESSING, IEEE SERVICE CENTER, NEW YORK, NY, US, Bd. 55, Nr. 12, 1. Dezember 2008 (2008-12-01) bezieht sich auf eine verteilte Schätzung einer Quelle in additivem gaußschen Rauschen, beobachtet durch Sensoren die mit einem Fusionszentrum mit unbekannten orthogonalen (parallelen) flachen Weiterleitungsschwundkanälen verbunden sind. Insbesondere wird die Orthogonalität von Symbolsequenzen verwendet, um zu erreichen, dass die Information, die durch einzelne Sender gesendet wird, an der Empfangsseite trennbar ist. Dann wird in einem sogenannten "Fusionszentrum" eine Summierung oder eine andere mathematische Operation an den übertragenen Werten durchgeführt.

Die objektive Aufgabe der vorliegenden Erfindung besteht deshalb darin, ein Schema für eine Funktionsvariablenwert-Übertragung und Funktionsergebnisberechnung zu schaffen, so dass insgesamt der Aufwand zur Erlangung des Funktionsergebnisses reduziert wird, in beispielsweise Energie und/oder Wiederholzeitdauer.

Diese Aufgabe wird durch einen Funktionsempfänger gemäß Anspruch 1, einen Funktionsvariablenwert-Sender gemäß Anspruch 5 oder 6, ein System gemäß Anspruch 8 oder 10 und ein Verfahren gemäß Anspruch 12, 13 oder 14 gelöst.

Die Erkenntnis der vorliegenden Erfindung besteht zum einen darin, dass es möglich ist, eine sendeseitige Schätzung des komplexen Kanaleinflusses zwischen Funktionsvariablenwert-Sendern auf der einen und Funktionsempfänger auf der anderen Seite auf die Schätzung des Betrags des Kanaleinflusses zu beschränken, so dass eine Vorverzerrung der Symbole der Symbolfolgen zwar abhängig von einem Inversen des Betrags des Kanaleinflusses, aber unabhängig von einer Phase des Kanaleinflusses ist, und insbesondere darin, dass diese Erleichterung in der Kanalschätzung nichts an der zentralen Tendenz der über den Mehrfachkanal übermittelten und berechneten Funktionsergebnisse ändert. In anderen Worten ausgedrückt, besteht eine Erkenntnis der vorliegenden Erfindung darin, dass die Vereinfachung in der Kanalschätzung nicht zu einer Verfälschung des Funktionsergebnisses führt.

Gemäß einem weiteren Aspekt der vorliegenden Anmeldung besteht eine Erkenntnis darin, dass es möglich ist, die Vorverzerrung auf Seiten der Funktionsvariablenwert-Sendern wegzulassen und stattdessen auf Seiten des Funktionsempfängers eine statistische Größe zu ermitteln, die den Mehrfachzugriffskanal beschreibt. Dazu reicht es aus, wenn die Funktionsvariablenwert-Sender über den Mehrfachzugriffskanal in einer Kanalschätzungsphase Konstantleistungssignale senden. Der Kanalschätzungsaufwand wird damit auf den Funktionsempfänger verlegt und tritt somit weniger oft auf, was wiederum den Gesamtenergieaufwand verringert. Insbesondere verringert er sich auf Seiten der Funktionsvariablenwert-Sender, was insbesondere bei Anwendungen vorteilhaft ist, bei denen dieselben autark bzw. batteriebetrieben sind.

Gemäß Ausführungsbeispielen der vorliegenden Erfindung besitzt der Funktionsempfänger nicht nur eine, sondern eine Mehrzahl von Antennen, wobei das Funktionsergebnis auf Basis einer Summe von Empfangsleistungen des zweiten Mehrfachzugriffkanals an den mehreren Antennen erhalten wird. Es lässt sich zeigen, dass in vielen Anwendungsfällen durch dieses Vorgehen ein besseres Verhältnis zwischen Genauigkeit des erhaltenen Funktionsergebnis auf der einen Seite und der Länge der Folgen von Symbolen und damit der notwendigen Energie pro Funktionsergebnis bzw. die erzielbare Funktionsergebniswiederholrate verbessert werden kann, z.B. so sehr, dass auch obige Ausführung mit empfangsseitiger Kanalschätzung auf Basis einer Überlagerung von Konstantleistungssignalen von den Funktionsvariablenwert-Sendern für Anwendungen geeignet ist, bei denen eine hohe Genauigkeit gefordert wird.

Bevorzugte Ausführungsbeispiele der vorliegenden Erfindung werden nachfolgend Bezug nehmend auf die beiliegenden Zeichnungen näher erläutert. Es zeigen:

Fig. 1          eine schematische Darstellung eines Systems aus FunktionsvariablenwertSendern und Funktionsempfänger gemäß einem Ausführungsbeispiel;

Fig. 2          eine schematische Darstellung eines Ausführungsbeispiels für ein System aus Funktionsvariablenwert-Sendern und Funktionsempfänger gemäß einem Ausführungsbeispiel, wobei der Funktionsempfänger über mehrere Antennen verfügt;

Fig. 3          ein Blockschaltbild zur Veranschaulichung der Nutzung eines Mehrfachzugriffkanals zur Funktionsvariablenwert-Übermittlung und Funktionsberechnung gemäß einem Ausführungsbeispiel;

Fig. 4a          ein Blockschaltbild eines Systems aus Funktionsvariablenwert-Sendern und Funktionsempfänger gemäß einem detaillierteren Ausführungsbeispiel;

Fig. 4b und c          Blockschaltbilder für verschiedene Ausführungsbeispiele eines Funktionsempfängers des Systems von Fig. 4a;

Fig. 5a          ein Blockschaltbild eines Systems aus Funktionsvariablenwert-Sendern und Funktionsempfänger gemäß einem weiteren detaillierteren Ausführungsbeispiel;

| Fig. 5b und c | Blockschaltbilder für verschiedene Ausführungsbeispiele eines Funktionsempfängers des Systems von Fig. 5a; |
|---|---|
| Fig. 6 | Graphen zur Veranschaulichung des Nutzens mehrerer Antennen für den Fall der funktionsempfängerseitigen Schätzung des Kanaleinflusses über statistische Größen gemäß dem Ausführungsbeispiel von Fig. 5a-c; |
| Fig. 7 | weitere Graphen zur Veranschaulichung des in Fig. 6 gezeigten Ergebnisses für eine höhere Anzahl an Funktionsvariablenwert-Sendern und eine höhere Anzahl von Symbolen pro Symbolfolge; und |
| Fig. 8a-f | Graphen zur Veranschaulichung eines Performanzvergleichs zwischen dem Fall der vereinfachten Schätzung des Kanaleinflusses gemäß dem Ausführungsbeispiel von Fig. 4a-c mit dem Fall einer getrennten Funktionsvariablenwert-Übertragung mittels TDMA und anschließender Funktionsberechnung. |

Bevor im Folgenden auf die speziellen Details von Ausführungsbeispielen der vorliegenden Erfindung eingegangen wird, soll im Folgenden noch einmal der grundsätzliche Aufbau eines Systems beschrieben werden, bei dem die dann nachfolgend beschriebenen Ausführungsbeispiele verwendet werden können. Fig. 1 zeigt ein solches System mit einer Mehrzahl von Funktionsvariablenwert-Sendern $10_1$-$10_K$ und einem Funktionsempfänger 12. Die Aufgabe des Systems ist es, an dem Funktionsempfänger 12 ein Funktionsergebnis bereitzustellen, das gemäß einer vordefinierten und gewünschten Funktion $f$ von einer Mehrzahl von Funktionsvariablenwerten abhängt, die von den Funktionsvariablenwert-Sendern $10_1$-$10_K$ auf eine Art und Weise, die im Folgenden noch näher erörtert werden wird, zeitlich überlappend übermittelt werden. Die aufsummierende Eigenschaft des sich zwischen Funktionsvariablenwert-Sendern $10_1$-$10_K$ auf der einen und Funktionsempfänger 12 auf der anderen Seite befindlichen Mehrfachzugriffkanals wird als Teil der Funktionsergebnisberechnung verwendet. Der Einfluss des sich ggf. zeitlich verändernden Kanaleinflusses des Mehrfachzugriffkanals auf die Sendesignale von den Funktionsvariablenwert-Sendern $10_1$-$10K$ zu dem Funktionsempfänger 12 sind in der Fig. 1 mit $H_1(t)$-$H_K(t)$ für die $K$ einzelnen Wegstrecken definiert und ist komplexwertig insofern, als er sowohl Phase als auch Betrag der einzelnen Sendesignale beeinflusst. In einer ersten Näherung kann der Kanaleinfluss $H_{1...K}(t)$ für die einzelnen Wegstrecken zwischen einem jeweiligen Funktionsvariablenwert-Sender und dem Funktionsempfänger 12 mit einer komplexwertigen Zahl geschätzt werden.

Bei dem System von Fig. 1 kann es sich beispielsweise um ein Sensornetzwerk handeln, was anders ausgedrückt bedeuten kann, dass es sich bei den Funktionsvariablenwerten, die von den Funktionsvariablenwert-Sendern $10_1$-$10_K$ als Funktionsvariable für die Berechnung des Funktionsergebnisses bereitgestellt werden, um Sensorwerte handeln kann, wie z.B. um Temperaturwerte, Druckwerte, Feuchtigkeitswerte, Beschleunigungswerte usw. Die vorliegende Erfindung ist aber nicht auf Sensornetzwerke eingeschränkt und so kann es sich bei den Funktionsvariablenwerten auch um andere, beispielsweise simulierte oder sonst irgendwie bereitgestellte Daten handeln. Im Folgenden wird vereinfacht manchmal davon ausgegangen, dass es sich um ein Sensornetzwerk handelt, wobei diese Passagen dann selbstverständlich nicht einschränkend auszulegen sind, sondern lediglich dem leichteren Verständnis dienen. Die so zu übertragenden und zur Berechnung des Funktionsergebnisses heranzuziehenden Funktionsvariablenwerte sind in Fig. 1 mit $X_1(t)$-$X_K(t)$ bezeichnet, während das Funktionsergebnis selbst mit $Y(t)$ bezeichnet ist, wobei der Zeitparameter $t$ zum Ausdruck bringt, dass es sich sowohl bei den Funktionsvariablenwerten als auch bei dem Kanaleinfluss um zeitlich variierende Größen handeln kann.

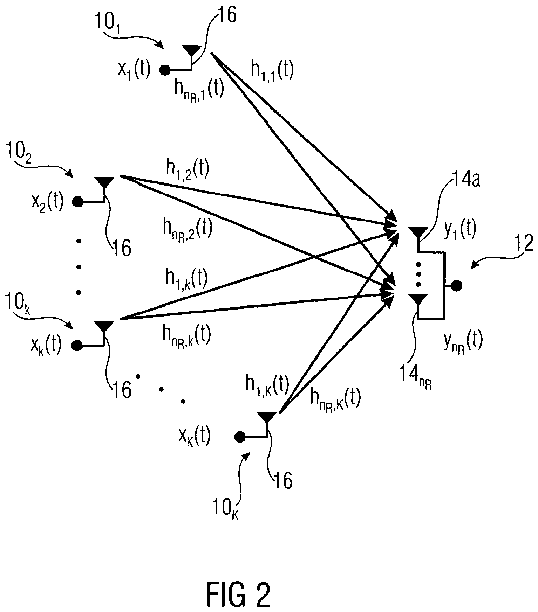

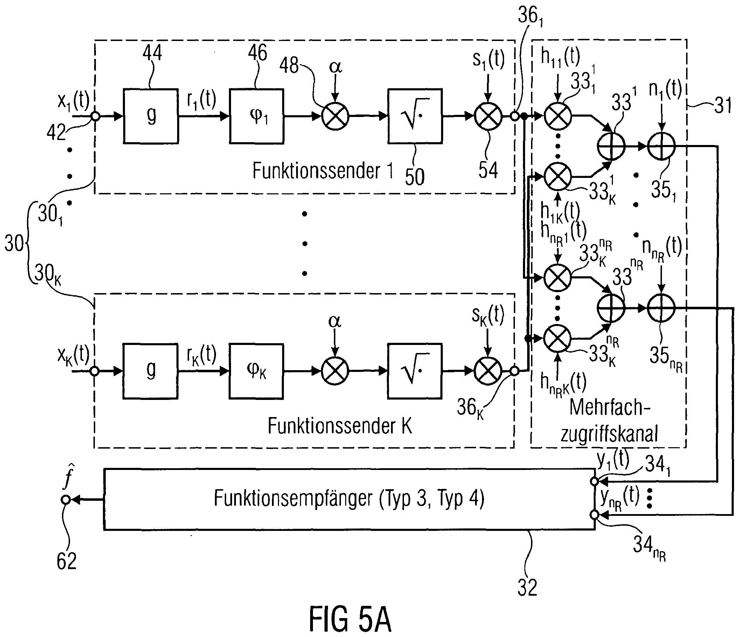

Fig. 2 zeigt ein Ausführungsbeispiel eines Systems gemäß Fig. 1 für den Fall, dass der Funktionsempfänger 12 eine Mehrzahl von Antennen 14a-14$n_R$ aufweist, wohingegen hier exemplarisch die Funktionsvariablenwert-Sender jeweils nur eine Antenne 16 aufweisen. Wie es im Folgenden noch näher erörtert werden wird, werden die an den mehreren Antennen 14a-14$n_R$ empfangenen Anteile getrennt voneinander in Empfangsleistungen, wie z.B. in integrierter Form als Empfangsenergien, umgesetzt, die wiederum aufsummiert werden, um auf Basis der Summe das Funktionsergebnis zu erhalten. Die Verarbeitung der Empfangsleistungssumme wird im Folgenden noch näher erörtert, sieht aber gemäß einem im folgenden bezugnehmend auf Fig. 5a-c beschriebenen Ausführungsbeispiel grob gesprochen eine empfangsseitige Korrektur des Kanaleinflusses mittels eines statistischen Wertes vor, der den Kanaleinfluss beschreiben soll und auf Basis von Konstantleistungssignalen erhalten wird, die von den Funktionssendern zeitlich überlappend ausgesendet werden, eine Korrektur des Empfängerrauschens durch Subtraktion sowie eine Nachverarbeitung zur Anpassung der Mehrfachzugriffskanalfunktionseigenschaften an die gewünschte Funktion. In Fig. 2 sind manche Größen, die in Fig.1 mit großen Buchstaben angezeigt sein, mit kleinen Buchstaben angedeutet, wie z.B. die zu übertragenden und dem Funktionsergebnis zugrunde zu legenden Funktionsvariablenwerte mit $x_{1...K}(t)$ und der komplexe Kanaleinfluss mit $h_{1...n_R,1...K}(t)$ für die jeweiligen $n_R \cdot K$ Wegstrecken zwischen den Antennen 16 der Funktionsvariablenwert-Sender $10_1$ auf der einen und den $n_R$ Antennen des Funktionsempfängers 12 auf der anderen Seite, und $y_{1...n_R}(t)$ deutet die einzelnen Empfangsanteile an den einzelnen Antennen 14a-14$n_R$ an.

Im Folgenden wird ohne Einschränkung der Allgemeinheit der Fall betrachtet, dass der Funktionsempfänger 12 $n_R$ Antennen aufweist. Das geschieht aber lediglich vor dem Hintergrund, dass die Betrachtung dieses Falles auch den Fall abdeckt, dass der Funktionsempfänger 12 lediglich eine Antenne, d.h. $n_R = 1$ aufweist. Dabei ist es von Vorteil, wenn der Funktionsempfänger 12 lediglich eine Antenne aufweist, wenn die Vorentzerrung auf Seiten der Funktionssender durchgeführt wird, da dann lediglich Kanalschätzungsphasen für diese eine Antenne geopfert werden müssen und auch nur eine Normalbetriebsphase mit einer Vorentzerrung für die eine Empfangsantennen an den Sendern erforderlich ist, und umgekehrt ist in dem Fall der empfangsseitigen Kanalschätzung und -korrektur wie im Folgenden dargelegt das Vorsehen mehrerer Antennen vorteilhaft, um die Qualität des Funktionsergebnisses zu erhöhen. Von daher sollen im Hinblick auf die Antennenanzahl die nachfolgenden Ausführungsbeispiele nicht einschränkend verstanden werden. Auf Details bezüglich des internen Aufbaus und der Funktionsweise der Funktionsvariablenwert-Sender $10_1$-$10_K$ auf der einen und des Funktionsempfängers 12 auf der anderen Seite sowie von deren Zusammenspiel soll im Folgenden erst später eingegangen werden. Zunächst wird versucht, die Hauptaspekte der einzelnen Ausführungsbeispiele zu motivieren und zu beschreiben, die darin bestehen, dass bei ersten Ausführungsbeispielen die Funktionsvariablenwert-Sender-seitigen Kanalschätzungen auf den Betrag des Kanaleinflusses beschränkt werden, während die Phase des Kanaleinflusses bei der Vorverzerrung unberücksichtigt bleibt, und bei zweiten Ausführungsbeispielen die Kanalschätzung auf Seiten des Funktionsempfängers durchgeführt wird, und zwar auf Basis von Konstantleistungssignalen, die von den Funktionsvariablenwert-Sendern zeitlich überlappend über den Mehrfachzugriffskanal ausgesendet werden und unter der Verwendung vorbestimmter Annahmen auf Seiten des Funktionsempfängers dazu verwendet werden, eine statistische Größe zu ermitteln, die den Mehrfachzugriffskanal beschreibt.

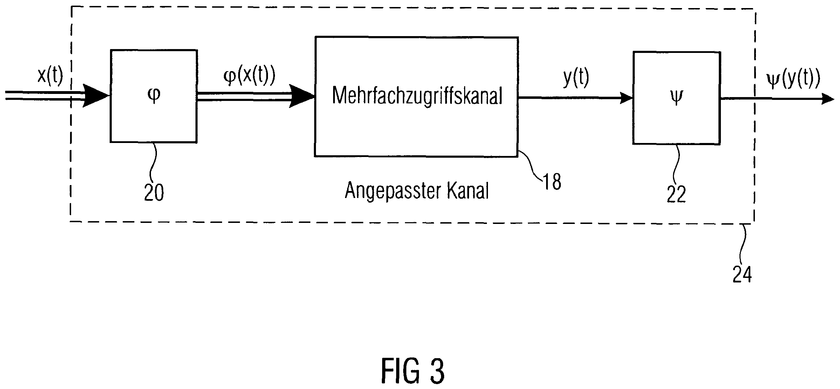

Der Ansatz, der den nachfolgend beschriebenen Ausführungsbeispielen zugrunde liegt, besteht zunächst darin, dass die Sensordaten $x_{1\ldots K}(t)$ auf eine reellwertige Sendeleistung abgebildet bzw. als reellwertige Sendeleistung verwendet werden, mit der die einzelnen Sendeknoten $10_1$-$10_K$ zufällig generierte komplexwertige Sequenzen $\boldsymbol{s}_k(t)=(S_{k1}(t),\ldots,S_{kM}(t))^T$ der Länge $M$ übertragen. Die komplexen Elemente bzw. Symbole $S_{km}(t)$, $k=1,\ldots,K$; $m=1,\ldots,M$ besitzen beispielsweise den Betrag $1/\sqrt{M}$ und können beispielsweise eine gleichverteilte Phase im Intervall $[0,2\pi)$ besitzen, die beispielsweise statistisch unabhängig für alle $k$ und alle $m$ sein kann. Letztere Maßnahme bewirkt zwar keine Orthogonalität zwischen den einzelnen Symbolfolgen der einzelnen Funktionsvariablenwert-Sender $10_1$-$10_K$, aber dafür bewirkt es eine Dekorrelation zwischen den Funktionsvariablenwerten $x_{1\ldots K}(t)$ auf der einen und der Überlagerung derselben über den Mehrfachzugriffskanal am Empfänger 12 auf der anderen Seite. Das hat den Vorteil, dass keine präzise Symbol- und Phasensynchronisation der Sensorknoten $10_1$-$10_K$ zueinander und relativ zum Empfangsknoten 12 notwendig ist, um eine konstruktive Überlagerung der Sendesignale am Empfangsknoten 12 zu gewährleisten, sondern es ist lediglich in größeren Zeitabschnitten eine grobe Blocksynchronisation zu gewährleisten, die ausreicht, damit sich die Symbolfolgen der Sender $10_1$-$10_K$ über eine ausreichende Zeit hinweg, über die der Empfangsknoten 12 die Empfangsleistung ermittelt, überlappen, was die nachfolgend beschriebenen Ausführungsbeispiele sehr robust gegenüber Synchronisationsfehlern macht. Um die Menge der Funktionen, die mit Hilfe des drahtlosen Vielfachzugriffskanals berechnet werden können, zu erweitern, können an den einzelnen Sendeknoten $10_1$-$10_K$ adäquate Vorverarbeitungsfunktionen $\varphi_k$ verwendet werden, die auf die Messdaten $X_k(t)$ wirken, also $\varphi_k(X_k(t))$, wobei umgekehrt der Empfangsknoten 12 eine zugehörige Nachverarbeitungsfunktion $\psi$, die auf den Ausgang des Vielfachzugriffskanals angewendet wird, also $\psi(Y_n(t))$, $n = 1,\ldots,n_R$ verwenden kann. Der Ausgang des Vielfachzugriffskanals entspricht dabei, wie gesagt, in dem Fall von mehr als einer Empfangsantenne $14a$-$14n_R$ dem Empfangssignal an jeder einzelnen der Antennen $14a$-$14n_R$. Diese Vor- und Nachverarbeitungsfunktionen können abhängig von der gewünschten Funktion $f$ so gewählt werden, dass sie insgesamt den Vielfachzugriffskanal an die gewünschte Funktion $f$ anpassen bzw. eine entsprechende Transformation durchführen. Qualitativ ist dieser Zusammenhang in Fig. 3 versinnbildlicht. Die Funktionsvariablen- bzw. Sensorwerte $x(t)$ werden, bevor sie als Sendeleistung über den Mehrfachzugriffskanal 18 übertragen werden, durch die Vorverarbeitungsfunktion 20, nämlich $\varphi$, auf $\varphi(x(t))$ abgebildet, wobei das entstehende Mehrfachzugriffskanal-Signal $y(t)$ am Empfänger 14 der Nachverarbeitungsfunktion 22 zugeführt wird, nämlich $\psi$, woraus sich das gewünschte Ergebnis ergibt, d.h. $\psi(y(t))$ gleich $f$ angewendet auf die $x(t)$ aller Funktionsvariablenwert-Sender. Die in Serie geschalteten Transformationen 20, 18 und 22 werden als angepasster Kanal 24 bezeichnet. Es sei angemerkt, dass mit Transformationen 20 und 22 auch eine Vielzahl von nichtlinearen Funktionen $f$ berechnet werden können. Fig. 3 veranschaulicht also, dass es möglich ist, die natürliche mathematische Kanalcharakteristik des Mehrfachzugriffskanals 18 an die mathematische Charakteristik der gewünschten Funktion $f$ durch Vor- und Nachverarbeitungsfunktionen $\varphi$ und $\psi$ anzupassen.

Da Sendeleistungen strikt positiv sind, ist es gemäß Ausführungsbeispielen vorgesehen, ggf. durch eine zusätzliche, beispielsweise bijektive bzw. eindeutig umkehrbare Funktion $g$, die in der Sequenz von Fig. 3 vor $\varphi$ auf $x(t)$ angewendet wird, dafür zu sorgen, dass die jeweilige Sendeleistung des Knotens $k$, d.h. $\varphi_k$, größer ist als 0 oder gleich 0 für alle Erregungszeitpunkte $t$ und vor allem für alle möglichen Messwerte $X_k$, $k=1\ldots,K$. Um das zu gewährleisten, sollte die Funktion g so ausgewählt werden, dass sie die Messwerte $X_k$ vor der Vorverarbeitung mit $\varphi_k$ so transformiert,

d.h. $g(X_k(t)) = R_k(t)$, dass die Randbedingung $\varphi_k(R_k(t))>0$ erfüllt ist. Ferner kann eine Konstante $\alpha > 0$ in die Signalverarbeitungskette nach Fig. 3 beispielsweise zwischen den Blöcken 20 und 18 so eingeführt werden, dass mittels dieser multiplikativen Konstante für die Einhaltung von strengen Sendeleistungsbeschränkungen an Sensorknoten gesorgt werden kann, d.h. für die Einhaltung von $\alpha \cdot \varphi_k(R_k(t)) \leq P_{max}$. In anderen Worten ausgedrückt, wenn beispielsweise die Sensorknoten $10_1$-$10_K$ durch eine maximale Sendeleistung $P_{max}$ limitiert sind, kann $\alpha$ gerade so gewählt werden, dass grundsätzlich $0 < \alpha\varphi_k(g(X_k(t))) \leq P_{max}$ gilt. Die vorbeschriebenen Maßnahmen werden empfangsseitig umgekehrt. Für den Fall der Verwendung des Faktors $\alpha$ an den Funktionsvariablenwert-Sendern, sollte dieser Wert $\alpha$ also an dem Empfangsknoten 12 bekannt sein. Zudem sollte $\alpha$ unabhängig von $k$ bzw. für alle Funktionsvariablen-Sender $10_1$-$10_K$ gleich sein. Auf diese Weise kann der Funktionsempfänger den Einfluss von $\alpha$ auf den Funktionsergebniswert rückgängig machen. Das Gleiche gilt für die vorbeschriebene Maßnahme zur Anpassung des Definitionsbereichs der Funktionsvariablenwerte an den Definitionsbereich des Mehrfachzugriffskanals 18 - nur positive Sendeleistungen. Der Funktionsempfänger 12 wendet auf das Ausgangsergebnis der Transformation 22, d.h. $\psi$, noch die Umkehrfunktion $g^{-1}$ an, woraus sich dann das gewünschte Ergebnis ergibt, d.h. der Funktionsergebniswert der Funktion $f$ angewendet auf die Funktionsvariablenwerte $X_k$.

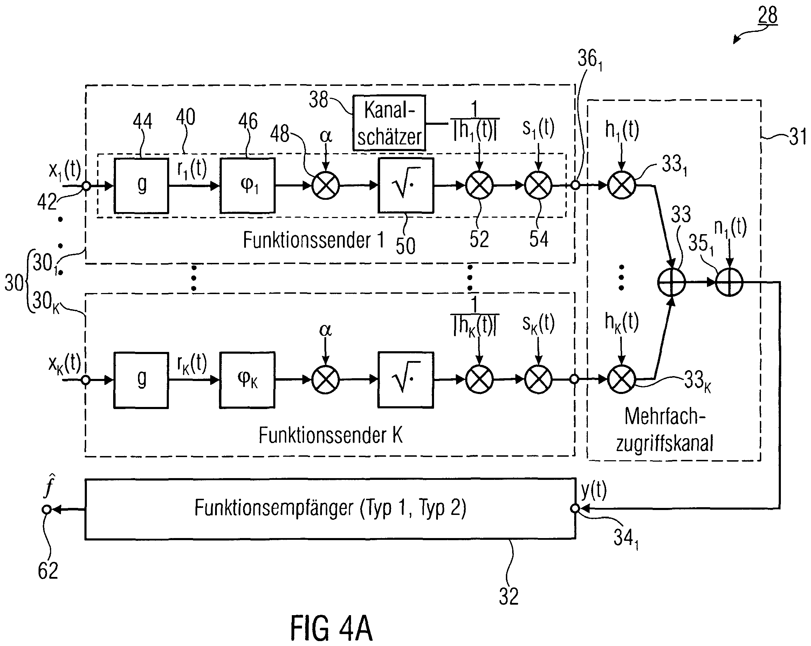

Die soeben im Nachgang zur Beschreibung der Fig. 3 erörterte vollständige Signalverarbeitungskette wird bei den noch später beschriebenen Ausführungsbeispielen von Fig. 4a-c und 5a-c verwendet. In speziellen Anwendungsfällen mit speziellen gewünschten Funktionen und speziellen Wertebereichen für die Variablen kann sich die Signalverarbeitungskette allerdings auf die Übertragung über den Mehrfachzugriffskanal beschränken.

In anderen Worten ausgedrückt, zeigt Fig. 3 eine mögliche vollständige Signalverarbeitungskette für das System von Fig. 1 bzw. 2 für den Fall, dass der Kanaleinfluss des Mehrfachzugriffskanals auf die einzelnen Kanäle zwischen den einzelnen Sendeknoten $10_1$-$10_K$ auf der einen und dem Empfangsknoten 12 auf der anderen Seite keine Rolle spielt. In wiederum anderen Worten ausgedrückt, ging Fig. 3 davon aus, dass der Mehrfachzugriffskanal 18 lediglich die auszunutzende Summeneigenschaft aufweist, die einzelnen Signale der Funktionsvariablenwert-Sender $10_1$-$10_K$ aber nicht darüber hinaus beeinflusst. Diese Annahme wäre natürlich dann gerechtfertigt, wenn dieser Kanaleinfluss vollständig bekannt wäre bzw. für den Fall perfekter komplexer Kanalkenntnis. Beispielsweise könnte diese perfekte komplexe Kanalkenntnis an den Sensorknoten $10_1$-$10_K$ dazu verwendet werden, die Sendesignale, die den Mehrfachzugriffskanal 18 passieren, mit den Inversen des komplexen Kanaleinflusses vorzuverzerren bzw. zu multiplizieren, wodurch sich der Einfluss des Mehrfachzugriffskanals 18 auf die Summenbildung beschränkte. Allerdings ist, wie in der Beschreibungseinleitung der vorliegenden Anmeldung beschrieben wurde, die Schätzung eines komplexen Kanaleinflusses inklusive Betrag und Phase eine aufwendige Angelegenheit, und eine Vereinfachung der Kanalschätzung ist deshalb von enormer Bedeutung. Die Ausführungsbeispiele von Fig. 4a-c und 5a-c erreichen dieses Ziel.

Beide Ausführungsbeispiele, d.h. dasjenige von Fig. 4a-c sowie dasjenige von Fig. 5a-c, sind in der Lage, den drahtlosen Mehrfachzugriffskanal - im Folgenden auch manchmal als Vielfachzugriffskanal bezeichnet - explizit für die Berechnung von gewünschten Funktionen zu benutzen. Der Einfluss des Kanals bleibt zwar nicht unberücksichtigt, allerdings ist gemäß diesen Ausführungsbeispielen auch keine perfekte komplexwertige Kanalinformation notwendig, weder an den Sensorknoten noch am Empfangsknoten.

Gemäß dem Ausführungsbeispiel von Fig. 4a-c wird nun von dem Umstand Gebrauch gemacht, dass die Summeneigenschaft des Kanals nicht nur für die Funktionsberechnung vorteilhaft ist, sondern gleichzeitig auch vorteilhaft auf Maßnahmen gegen Fading-Effekte wirkt. Es stellt sich heraus und wird weiter unten auch noch mathematisch hergeleitet, dass aufgrund der Tatsache, dass die Messwertinformation bzw. die Variablenwerte als Sendeleistung codiert werden, die Sensorknoten zur Vorverzerrung nicht den vollständigen komplexwertigen Kanaleinfluss, wie z.B. den vollständigen komplexen Kanalkoeffizienten, schätzen müssen, was wiederum eine sensible und sehr aufwendige Phasenschätzung erfordern würde, sondern lediglich den Betrag $|h_k(t)|$ des Kanaleinflusses bzw. -koeffizienten zwischen dem $k$-ten Knoten und der Empfangsantenne, um mit demselben den Kanal vor der Übertragung zu invertieren. Das ist wiederum unabhängig von der jeweiligen Statistik der Kanäle. In der konkreten Anwendung bzw. dem konkreten Ausführungsbeispiel, das Bezug nehmend auf Fig. 4a-c noch beschrieben wird, bedeutet dies, dass der Empfangsknoten anhand einer bekannten Pilotsequenz eine Funktionswertübertragung initiieren kann, die die Sensorknoten gleichzeitig dafür nutzen, die Beträge des jeweiligen Kanaleinflusses bzw. die Beträge der Kanalkoeffizienten zwischen den einzelnen Wegstrecken adäquat zu schätzen. Anschließend invertiert jeder Sender den Übertragungskanal während der Übertragung nicht mit dem komplexen Koeffizienten $1/h_k(t)$, sondern eben lediglich mit $1/|h_k(t)|$, was wiederum den Aufwand, die Komplexität und den Energiebedarf für die Kanalschätzung drastisch reduziert. Der durch die Quadratbildung in dem Funktionsempfänger, die im Folgenden noch näher erörtert wird und grob gesprochen dazu da ist, empfangsseitig die Empfangsleistung zu schätzen, entstehende kombinierte Restfehler bleibt trotz der Vereinfachung der Kanalschätzung weiterhin mittelwertfrei. Das heißt, der Restfehler weist trotz dieser Vereinfachung weiterhin einen Mittelwert von 0 auf, so dass bezüglich der Schätzperformanz nichts eingebüßt wird.

Da der Empfangsknoten an der Funktion $f$ interessiert ist und nicht etwa an der Rekonstruktion der einzelnen Messwerte, hat derselbe am Ausgang des Mehrfachzugriffskanals nur Zugriff auf eine verrauschte Linearkombination der Sendesignale, in die die Messwerte als Sendeleistung codiert sind. Eigentlich wäre es deshalb unmöglich, im Kontext der Funktionsberechnung die Fading-Einflüsse des Kanals empfangsseitig, d.h. am Empfänger 12, zu korrigieren, und dementsprechend wird bei dem Ausführungsbeispiel von Fig. 4a-c wie soeben erwähnt der Kanal ja auch vor der Übertragung eines Symbols bzw. eines Sendesignals von jedem Sendeknoten invertiert. Gemäß dem Ausführungsbeispiel von Fig. 5a-c wird jedoch der Aufwand der Kanalschätzung noch weiter reduziert. Dazu wird die spezielle Summenstruktur des drahtlosen Mehrfachzugriffskanals und die Langzeitstatistik der Kanalkoeffizienten berücksichtigt. Es stellt sich heraus und es wird im Folgenden auch noch mathematisch hergeleitet werden, dass mit steigender Antennenzahl $n_R$, steigender Knotenanzahl bzw. Anzahl von Sendeknoten $K$ sowie einer bestimmten Annahme an die statistische Verteilung der Fading-Koeffizienten über die Zeit eine Kanalschätzung an Sensorknoten sogar vollständig entfallen kann. Stattdessen wird gemäß dem Ausführungsbeispiel von Fig. 5a-c eine sehr einfach realisierbare Korrektur des Kanaleinflusses empfangsseitig bzw. am Empfänger 12 durchgeführt, indem zur Korrektur des Kanaleinflusses eine statistische Größe aus überlappend übertragenen Konstantleistungssignalen der Sendeknoten ermittelt wird. Beispielsweise wird nach dem Ausführungsbeispiel von Fig. 5a-c nach der Quadratbildung ($\|.\|^2$) eine Division durch $\sigma_H^2 + |\mu_H|^2$ durchgeführt. In solchen Fading-Umgebungen reduziert sich der Kanalschätzaufwand demzufolge auf die einfache Aufgabe, eine entsprechende statistische Größe zu ermitteln, wie z.B. lediglich das Moment zweiter Ordnung, d.h. $\sigma_H^2 + |\mu_H|^2$. In Fading-Szenarien, in denen $\sigma_H^2 + |\mu_H|^2 = 1$ gilt, könnte sogar vollständig auf eine Kanalschätzung verzichtet werden.

Nachdem im Vorhergehenden bereits ein Ausblick auf die grundsätzliche Funktionsweise von Ausführungsbeispielen der vorliegenden Erfindung skizziert worden ist, werden detailliertere Ausführungsbeispiele für ein System aus Funktionsvariablenwert-Sendern und Funktionsempfänger Bezug nehmend auf Fig. 4a-c und 5a-c beschrieben. Dabei zeigt Fig. 4a-c ein Ausführungsbeispiel für ein System mit sendeseitiger Kanalschätzung und Vorverzerrung der Sendesignale, während Fig. 5a-c eine weitere Vereinfachung des Kanalschätzungsaufwands dadurch liefert, dass die Kanalschätzung - wenn überhaupt nötig - auf die Empfangsseite verlegt, wo aus einer Überlagerung von Konstantleistungssignalen von den Funktionsvariablenwert-Sendern eine oder mehrere statistische Größen ermittelt werden, die den Kanaleinfluss beschreiben.

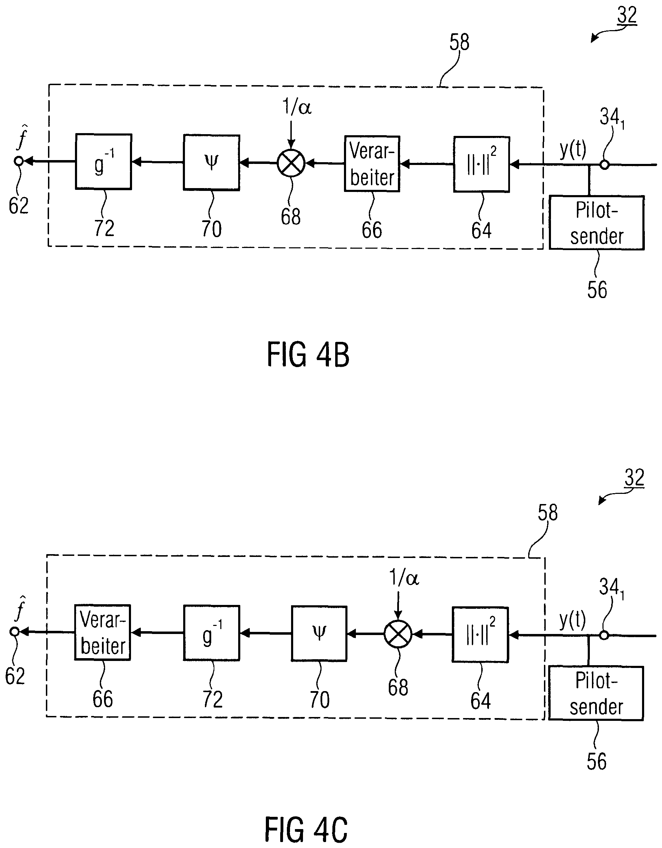

Es wird darauf hingewiesen, dass bei dem Ausführungsbeispiel von Fig. 4a-c, der Empfänger lediglich eine Antenne aufweist, so dass lediglich ein Pilotsignal notwendig ist, damit die Funktionssender basierend auf demselben sendeseitig den Kanal schätzen können, wie es im Folgenden noch detaillierter beschrieben wird, und damit bei der gemeinsamen zeitlich überlappenden Sendung durch die Funktionssender alle gezielt auf die gleiche, eine Empfangantenne hin vorentzerren können. Natürlich wäre ein Vorgehen möglich, wonach zeitlich sequentiell Pilotsignale von einzelnen Antennen des Funktionsempfängers aus abgesendet werden würden und auch die überlagerte Aussendung $n_R$ Male wiederholt werden würde - jedes mal mit einer anderen, empfangsantennenindividuellen Vorentzerrung an den Sendern -, aber der Organisationsaufwand wäre bei weitem höher. Bezogen auf die Nomenklatur aus Fig. 2 bedeutet dies, dass bei dem Ausführungsbeispiel von Fig. 4 lediglich die Kanaleinflüsse $h_{1, 1...K} = h_{1...K}$ zu berücksichtigen sind.

Fig. 4a-c zeigt also ein System 28 mit einer Mehrzahl 30 von Funktionsvariablenwert-Sendern bzw. Funktionssendern $30_1$-$30_K$, die jeweils über einen gemeinsamen Mehrfachzugriffskanal 31 mit einem Funktionsempfänger 32 des Systems 28 drahtlos kommunikativ verbunden sind. Der Mehrfachzugriffskanal 31 ist ein Drahtlosmehrfachzugriffskanal, wie z.B. ein Funkkanal, und besitzt, wie im Vorhergehenden beschrieben, eine Summeneigenschaft, die in Fig. 4 mit dem Bezugszeichen 33 angedeutet ist. Genauer ausgedrückt besitzt der Mehrfachzugriffskanal 31 die Eigenschaft, gleichzeitig ausgesendete Sendesignale von den Funktionssendern $30_1$-$30_K$ individuell gemäß einem komplexen Kanaleinfluss $h_1(t)$..., bzw. $h_K(t)$ zu beeinflussen (vgl. 33a-33K) und dann dieselben empfangsseitig an der Empfangsantenne $34_1$ aufzusummieren, wobei, wie es in Fig. 4 mit Bezugszeichen $35_1$ angedeutet ist, bei Empfang noch ein Empfängerrauschen $n_1(t)$ hinzukommt. In wiederum anderen Worten ausgedrückt, beeinflusst der Mehrfachzugriffskanal 31 gleichzeitig an den Antennen $36_1$-$36_K$ ausgesendete Sendesignale auf ihren Wegen zur Empfangsantenne $34_1$, indem an der Antenne eine Summe des Empfängerrauschens $n_1(t)$ einerseits und der Summe 33 aus den mit dem jeweiligen komplexen Kanaleinfluss $h_k(t)$ multiplikativ beeinflussten Sendesignalen des jeweiligen Funktionssenders $30_k$ andererseits empfangen wird.

Jeder Funktionssender $30_1$-$30_K$ ist intern gleich aufgebaut, weshalb die Beschreibung und die Bezugszeichen im Folgenden auf den Funktionssender $30_1$ eingeschränkt wird, aber natürlich analog für die anderen Funktionssender gelten soll. Der Funktionssender $30_1$ umfasst einen Kanalschätzer 38 zum Schätzen eines Betrags des komplexen Kanaleinflusses $h_{n1}(t)$ zwischen dem Funktionssender $30_1$ und dem Funktionsempfänger 32. Ferner umfasst der Funktionssender $30_1$ einen Sender 40 zum Senden einer Folge von Symbolen mit zufällig zeitlich variierender, pseudo-zufällig zeitlich variierender oder deterministisch mit einer Gleichverteilung zeitlich variierender Phase und einem Betrag, der für die Symbole gleich ist und von dem zu übermittelnden und zu dem Funktionsergebnis beizutragenden Funktionswert $x_1(t)$ abhängt, und zwar unter Vorverzerrung der Symbole abhängig von dem Inversen des Betrags des Kanaleinflusses, aber unabhängig von einer Phase des Kanaleinflusses.

Der Sender 40 umfasst neben der Antenne $36_1$, d.h. der Schnittstelle zum Mehrfachzugriffskanal 31, einen Eingang 42 für den zu übermittelnden und als Funktionsvariable für das Funktionsergebnis heranzuziehenden Funktionswert $x_1(t)$. Dazwischen umfasst der Sender 410 intern in der nachfolgend genannten Reihenfolge in Serie geschaltet einen Definitionsbereichanpasser 44, einen Vorverarbeitungstransformierer 46, einen Sendeleistungseinsteller 48 zur Sicherstellung der Einhaltung von Maximalleistungsvorgaben für den Sender 40, einen Wurzelzieher 50, einen Vorverzerrer 52 und einen Symbolfolgengenerator 54 zur Generierung der vorbeschriebenen Symbolfolgen unter Verwendung des Ausgangssignals des Vorverzerrers 52 als Amplitude für die Symbolfolgen.

Auf der anderen Seite umfasst der Funktionsempfänger 32 gemäß dem Ausführungsbeispiel von Fig. 4b verbunden mit der Antenne $34_1$ einen Pilotsender 56 sowie einen Funktionsergebnisbestimmer 58. Der Funktionsergebnisbestimmer 58 ist zwischen die Antenne $34_1$, die als Schnittstelle zum Mehrfachzugriffskanal 31 wirkt, und einen Ausgang 62 des Funktionsempfängers 32 geschaltet, an dem das Funktionsergebnis $f$ ausgegeben wird. Intern umfasst der Funktionsergebnisbestimmer 58 eine Serienschaltung aus einem Leistungsschätzer 64, einem Verarbeiter 66, auf dessen Funktion im Folgenden noch eingegangen wird, einem Empfangsleistungsniveaueinsteller 68, einem Nachverarbeitungstransformierer 70 und einem Definitionsbereichsrückanpasser 72, die in der genannten Reihenfolge zwischen Schnittstelle $34_1$ auf der einen und Ausgang 62 auf der anderen Seite geschaltet sind.

Nachdem im Vorhergehenden der Aufbau des Systems 28 beschrieben worden ist, wird im Folgenden die genaue Funktionsweise der einzelnen Blöcke und ihr Zusammenspiel erläutert. Wie bereits im Vorhergehenden oftmals erwähnt, codieren die Funktionssender $30_1$-$30_K$ ihren jeweiligen Funktionswert $x_1$-$x_K$ als Sendeleistung. Dazu generieren die Symbolfolgengeneratoren 54 Folgen von komplexen Symbolen mit vorzugsweise zufällig zeitlich variierender Phase, vor allem unabhängig voneinander zufällig zeitlich variierender Phase. Die Zufälligkeit kann durch einen in Fig. 4a nicht weiter dargestellten echten Zufallszahlengenerator erzeugt werden. Allerdings ist eine Pseudo-Zufälligkeit völlig ausreichend. So könnte jeder der Funktionssender $30_1$-$30_K$ einen eigenen Pseudozahlen-Zufallsgenerator umfassen, die jeweils unterschiedliche oder zumindest zeitlich unterschiedliche Zufallszahlenfolgen liefern. Ein wenig bevorzugter Fall bestünde darin, dass die Symbolfolgengeneratoren 54 der Funktionssender $30_1$-$30_K$ Folgen von Symbolen liefern, die zwar jeweils einen deterministischen Phasenverlauf innerhalb der jeweiligen Symbolfolge aufweisen, und zwar so, dass sich die Phase einer jeweiligen Symbolfolge deterministisch mit einer Gleichverteilung zwischen allen möglichen Phasen zwischen 0 und $2\pi$ zeitlich ändert, wobei die Symbolfolgen wiederum zueinander unterschiedlich und vorzugsweise sogar orthogonal sind, aber dann ginge der auch schon vorher erwähnte und im Folgenden noch näher erläuterte Vorteil in Bezug auf eine Lockerung der Anforderungen an eine Synchronisation innerhalb des Systems 28 verloren. Im Folgenden wird deshalb davon ausgegangen, dass es sich um Symbolfolgen mit zufällig bzw. pseudo-zufällig zeitlich variierender Phase innerhalb der Symbolfolge handelt, und eine statistische Unabhängigkeit des Phasengangs zwischen den einzelnen Funktionssendern $30_1$-$30_K$ vorliegt.

Wie es weiter unten noch gezeigt wird, steigt mit zunehmender Anzahl der Symbole pro Symbolfolge die Genauigkeit des Funktionsergebnisses am Ausgang 62 des Funktionsempfängers 32. Die Amplitude der Symbolfolge und damit die Sendeleistung der Symbolfolge stellt der Symbolfolgengenerator 54 jeweils abhängig von dem jeweiligen Funktionswert am Eingang 42 ein. Der Funktionswert wird dazu zunächst so angepasst, dass wie Bezug nehmend auf Fig. 3 beschrieben die Summenbildung 33 durch den Mehrfachzugriffskanal 31 zu der gewünschten Funktion $f$ führt. Insbesondere wendet der Definitionsbereichsanpasser 44 die Bezug nehmend auf Fig. 3 vorerwähnte Funktion g auf den Funktionswert am Eingang 42 an, wobei das Ergebnis $r_1(t)$ wiederum von dem Vorverarbeitungstransformierer 46 durch die ebenfalls in Bezug auf Fig. 3 erwähnte Funktion $\varphi_1$ transformiert wird. Der Sendeleistungseinsteller 48 multipliziert das Ergebnis des Vorverarbeitungstransformierers 46 mit einem Wert $\alpha$ (vgl. Fig. 3), damit die Sendeleistungseinstellung abhängig von dem Funktionsvariablenwert am Eingang 42 nicht zu einer Überschreitung einer bestimmten maximalen Sendeleistung des jeweiligen Funktionssenders führen kann. Der Faktor $\alpha$ ist für alle Funktionssender $30_1$-$30_K$ gleich. Das gilt auch für die Funktion g und kann auch für die Vorverarbeitungsfunktionen $\varphi_1$-$\varphi_K$ gelten. Schließlich wird das Ergebnis des Sendeleistungseinstellers 48 einem Wurzelziehen durch den Wurzelzieher 50 unterzogen, da ja der Funktionswert am Eingang 42 als Sendeleistung codiert werden soll. Der so erhaltene Wert wird dann mit dem Betrag des jeweiligen komplexen Kanaleinflusses vorverzerrt, wie er von dem Kanalschätzer 38 geliefert wird. Bei dem Betrag des komplexen Kanaleinflusses handelt es sich beispielsweise um einen Skalar, nämlich den Betrag einer komplexen Zahl, deren Phase die durch den Mehrfachzugriffskanal 31 bewirkte Phasenverschiebung zwischen dem Funktionsempfänger 32 und dem jeweiligen Funktionssender $30_1$ beschreibt, aber durch den Vorverzerrer 52 unberücksichtigt bleibt, und deren Betrag die entsprechende Signalschwächung durch den Mehrfachzugriffskanal beschreibt. Die mathematische Rechtfertigung, dass das Wegbleiben bzw. unberücksichtigt Bleiben der Phase nichts an der Richtigkeit des späteren Ergebnisses an dem Ausgang 62 ändert, wird im Folgenden geliefert.

So vorverzerrt wird der aus dem Funktionsvariablenwert am Eingang 42 gewonnene Amplitudenwert als die Amplitude der Symbole der Symbolfolge $s_1(t)$ verwendet, die dann über die Schnittstelle $36_1$ bzw. die Antenne $36_1$ gleichzeitig mit den jeweils anderen Symbolfolgen der anderen Funktionssender auf den Mehrfachzugriffskanal 31 gegeben werden. Die Gleichzeitigkeit erfordert keine hochgenaue Synchronisation zwischen den Funktionssendern $30_1$ bis $30_K$. Beispielsweise arbeiten die Funktionssender $30_1$-$30_K$ lediglich in einer Genauigkeit synchronisiert zueinander, so dass eine Standardabweichung der Startzeitpunkte der zeitlich überlappenden Symbolfolgen dieser Sender 30 kleiner ist als eine Symbolzeitdauer der Folge von Symbolen.

In dem Mehrfachzugriffskanal 31 erfahren die einzelnen ausgesendeten Symbolfolgen unterschiedliche komplexe Kanaleinflüsse auf dem Weg bis zur Antenne $34_1$ des Funktionsempfängers 32, nämlich $h_1(t)$ für beispielsweise den ersten Funktionssender $36_1$. Die Summe 33 derselben erreicht die Antenne mit dem additiv hinzugefügten Empfängerrauschen $n_1(t)$. Das so erhaltene Empfangssignal $y_1(t) = y(t)$ wird dann empfangsseitig in dem jeweiligen Empfangsleistungsbestimmer 64 auf seine Empfangsleistung hin untersucht, indem beispielsweise über eine Zeitdauer der Anzahl der Symbole hinweg oder eine etwas geringere Zeit, wie z.B. eine um eine Symbolzeitdauer geringere Zeitdauer, das Empfangssignal quadriert und aufintegriert wird, und zwar beispielsweise kontinuierlich vermittels eines Quadrierers und Integrators oder über Abtastung des komplexen Basisbandsignals mit anschließender Quadration und Aufsummierung der komplexen Abtastwerte. Durch die Beschaffenheit der Symbolfolgen und die empfangsseitige Quadrierung erweist es sich, dass die zentrale Tendenz bzw. der Erwartungswert, wie z.B. der Mittelwert, der durch den Bestimmer 64 bestimmten Empfangsleistung abgesehen von dem additiven Empfängerrauschen $n(t)$ unbeeinträchtigt bleibt von der sendeseitigen Vereinfachung bei der Kanalschätzung in den Vorverzerrern 52 bzw. Kanalschätzern 38 bzw. unkorreliert ist zu der Phase bzw. der Phasenbeeinflussung des Kanaleinflusses in den individuellen Kanälen des Mehrfachzugriffskanals 31.

In der Verarbeitungseinheit 66 wird bei dem vorliegenden Ausführungsbeispiel die durch den Bestimmer 64 ermittelte Empfängerleistung um das Empfängerrauschen der Empfängerstufe korrigiert, indem die Empfängerrauschvarianz subtrahiert wird. Die nachfolgenden Module 68, 70 und 72 kehren dann die senderseitigen Maßnahmen in den Blöcken 44, 46 und 48 um, wie es Bezug nehmend auf Fig. 3 schon beschrieben worden ist, um ein Ergebnis $\hat{f}$ zu erhalten.

Bevor das nächste Ausführungsbeispiel beschrieben wird, wird nur kurz auf einige Verallgemeinerungsmöglichkeiten hingewiesen. Natürlich ist es nicht erforderlich, dass die Einheiten 44 und 72 vorgesehen sind. Beispielsweise kann es sein, dass der mögliche Wertebereich der eingehenden Funktionsvariablenwerte $x_1$-$x_K$ bereits an den erlaubten Bereich angepasst ist. Zudem ist die Trennung in die Funktionen $g$ und $\varphi_1$ bzw. $\psi$ und $g^{-1}$ nicht unbedingt erforderlich, sondern die beiden Funktionen können auch miteinander verschmolzen werden. Ähnliches gilt für die Operationen 48, 50 bzw. 68 und 66. Auch die Anwendung des Faktors $\alpha$ sendeseitig bzw. $1/\alpha$ empfangsseitig kann fehlen, wenn die Überschreitung einer maximalen Sendeleistung inhärent durch die Natur bzw. den Wertebereich der zu übertragenden Funktionsvariablenwerte ausgeschlossen ist.

Die obige Beschreibung beschrieb den Vorgang des Aussendens eines Satzes von Funktionsvariablenwerten $x_1$-$x_K$ auf dem Wege einer zeitlich überlappenden Aussendung von Symbolfolgen mit entsprechend eingestellter Amplitude bzw. Sendeleistung. Auf die Möglichkeit, wie die Funktionssender 30 synchronisiert werden könnten, und wie die Kanalschätzer 38 derselben die Kanalschätzung zu der Antenne $34_1$ durchführen könnten, soll nun eingegangen werden. Der Pilotsender 56 könnte dazu ausgelegt sein, ein Pilotsignal auszusenden, das über den Mehrfachzugriffskanal 31 auf jeweiligen Rückpfaden die einzelnen Funktionssender $30_1$-$30_K$ erreicht. Mittels dieses Pilotsignals schätzen dann die Kanalschätzer 38 den Betrag des jeweiligen Kanaleinflusses. Insbesondere ist es beispielsweise möglich, dass der Pilotsender 56 intermittierend auftretende Kanalschätzungsphasen nutzt, um ein Pilotsignal an der Antenne auszusenden. Die Kanalschätzer 38 der Funktionssender schätzen dann immer wieder in den intermittierend auftretenden Kanalschätzungsphasen den Betrag des komplexen Kanaleinflusses des Mehrfachzugriffskanals 31 zu der Antenne $34_1$ des Funktionsempfängers 32, d.h. jeder einen Kanaleinflussbetrag. Über diese sequentiellen Pilotsignale können sich die Funktionssender 30 auch auf eine gemeinsame Zeitbasis synchronisieren, wobei ja, wie im Vorhergehenden erwähnt, die Genauigkeit der Synchronisation nicht groß sein muss.

Bezug nehmend auf die Figuren 4a und 4b wurde somit ein Ausführungsbeispiel beschrieben, bei dem der Empfangsknoten eine Antenne besaß und eine Vorentzerrung des Kanals mit geschätzten Beträgen $|h_k(t)|$, $k = 1,...,K$, durchgeführt wurde. Der gemäß Fig. 4b verwendete Empfängertyp sah dabei die Verarbeitungseinheit 66 an einer Position innerhalb der Signalkette des Funktionswertbestimmers 58 nach der Empfangsleistungsbestimmung und noch vor den Modulen 68-72 zur Definitionsbereichsrückanpassung, Funktionsnachverarbeitung und Empfangsleisuntgsniveaueinstellung vor. Ein anderer Empfängertyp wäre für Fig. 4a ebenfalls denkbar und wird im Folgenden Bezug nehmend auf Fig. 4c beschrieben. Welcher der beiden Empfängertypen bei einem jeweiligen System verwendet werden sollte, kann beispielsweise von der jeweiligen gewünschten Funktion $f(x_1(t),...,x_K(t))$ abhängen. Der Typ nach Fig. 4b und der noch zu beschreibende Typ nach Fig. 4c unterscheiden sich dabei lediglich durch die Position des Verarbeiters 66 in der Signalverarbeitungskette des Funktionsergebnissbestimmers 58. Die Verarbeitungseinheit 66 übernimmt, wie oben geschildert, Maßnahmen, um der Funktionsschätzung $\hat{f}$ bestimmte statistische Eigenschaften, wie z.B. die Erwartungstreue, zu vermitteln. In der Abhängigkeit der gewünschten Funktion $\hat{f}$ macht die Position der Verarbeitungseinheit 66 einen Unterschied. Besteht die gewünschte Funktion beispielsweise in der Berechnung eines arithmetischen Mittelwerts

gemäß
$$f(x_1(t),\ldots,x_K(t)) = \frac{1}{K}\sum_{k=1}^{K} x_k(t),$$
dann ist der erwartungstreue Schätzer für diese Funktion beispielsweise durch

$$\hat{f}(x_1(t),\dots,x_K(t)) = g^{-1}\left(\psi\left(\frac{1}{\alpha}(\|\mathbf{y}(t)\|^2 \underbrace{-\sigma_N^2}_{Verarbeitungseiheit})\right)\right)$$

gegeben, wobei $\sigma_N^2$ die Rauschvarianz an der Antenne $34_1$, die dem Funktionsempfänger 32 bekannt ist, und $\psi(x) = x$ gilt. Man erkennt an der Gleichung, dass für diese gewünschte Funktion, nämlich den arithmetischen Mittelwert, der Funktionsempfänger 32 vom Typ nach Fig. 4b sein sollte, damit nämlich die subtraktiv durchgeführte Korrektur durch die Verarbeitungseinheit 66 an dem durch das Modul 64 bestimmten Empfangsrauschen analytisch an der entsprechenden Stelle stattfindet. Die Verarbeitungseinheit 66 hat hier also lediglich die Aufgabe, die Rauschleistung $\sigma_N^2$ vom Ergebnis der Normoperation ($\|.\|^2$) zu subtrahieren.

Denkbar wäre ja aber auch, dass die gewünschte Funktion beispielsweise dem geometrischen Mittelwert

$$f(x_1(t),\dots,x_K(t)) = \left(\prod_{k=1}^{K} x_k(t)\right)^{1/K}$$

entspricht. In diesem Fall besäße ein asymptotisch erwartungstreuer Schätzer für diese Funktion die Gestalt:

$$\hat{f}(x_1(t),\dots,x_K(t)) = g^{-1}\left(\psi\left(\frac{1}{\alpha}\|\mathbf{y}(t)\|^2\right)\right) \times \frac{1}{\underbrace{\mathbb{E}\left\{\psi\left(\frac{1}{\alpha}\mathbf{n}(t)^H \mathbf{n}(t)\right)\right\}}_{Verarbeitungseinheit}}$$

mit mit

$$\mathbb{E}\left\{\psi\left(\frac{1}{\alpha}\mathbf{n}(t)^H \mathbf{n}(t)\right)\right\}$$

$$\psi(x) = a^{\frac{1}{K}x},$$

dem Erwartungswert von $\mathbf{n}(t)^H \mathbf{n}(t)$ und $a > 1$ beliebig. Hier erkennt man, dass der Funktionsempfänger gemäß Fig. 4c verwendet werden sollte, wo nämlich im Unterschied zu dem Typ nach Fig. 4b die Verarbeitungseinheit 66 nicht zwischen Leistungseinsteller 68 und Empfangsleistungsbestimmer 64, sondern zwischen dem Ausgang 62 und dem Definitionsbereichsrückanpasser 72 angeordnet ist. Der Verarbeiter 66 führt hier eine Multiplikation mit dem Faktor

$$\mathbb{E}\left\{\psi\left(\frac{1}{\alpha}\mathbf{n}(t)^H \mathbf{n}(t)\right)\right\}^{-1}$$

aus, wobei dieser Erwartungwert wie dem Funktionsempfänger bekannt, wie z.B. vorab eingespeichert ist.

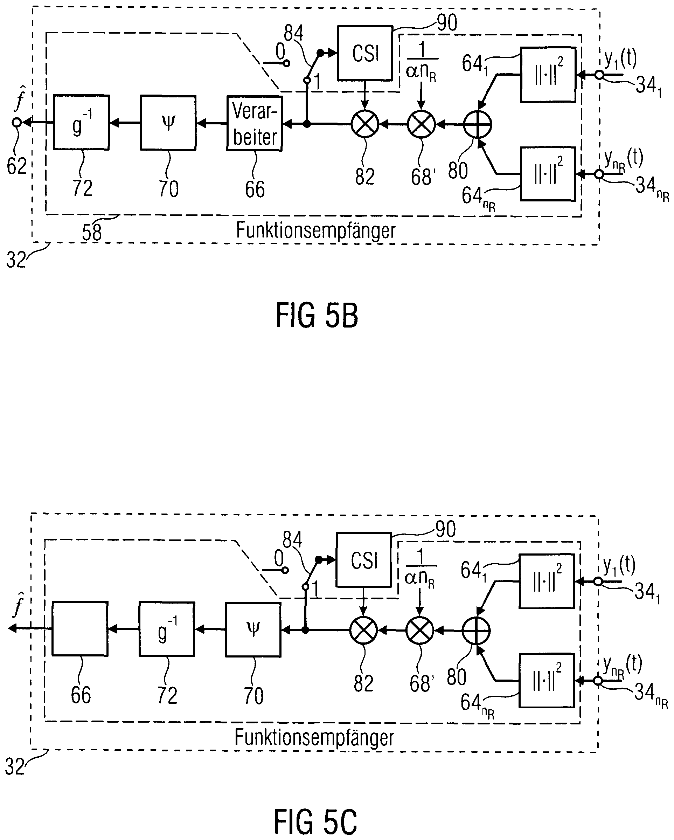

Im Folgenden wird das Ausführungsbeispiel von Fig. 5a-c beschrieben. Funktionsgleiche Elemente zu denjenigen, die in Fig. 4 gezeigt sind, sind in Fig. 5a-c mit den gleichen Bezugszeichen versehen und eine wiederholte Beschreibung derselben wird zur Vermeidung von Wiederholungen weggelassen. Die nachfolgende Beschreibung konzentriert sich vielmehr auf die Unterschiede zu dem Ausführungsbeispiel von Fig. 4a-c. Wie es bereits vor der Beschreibung der Fig. 4a-c herausgestellt worden ist, findet im Gegensatz zu dem Ausführungsbeispiel von Fig. 4a-c bei dem System 88 von Fig. 5a-c in den Funktionssendern $30_1$-$30_K$ keine Kanalschätzung statt. Dementsprechend fehlen die Kanalschätzer 38 in den Funktionssendern $30_1$-$30_K$ sowie die Vorverzerrer 52 in der Signalkette zwischen Funktionsvariablenwert-Eingang 42 und Mehrfachzugriffskanalschnittstelle $36_1$. Die Funktionssender $30_1$-$30_K$ des Systems 88 von Fig. 5 senden in Normalbetriebsphasen vielmehr ohne Vorverzerrung ihre jeweiligen Symbolfolgen mit zufälliger Phase mit einer Amplitude aus, die sich am Ausgang des jeweiligen Wurzelziehers 50 ergibt. Die Summeneigenschaft des Mehrfachzugriffskanals 31 tritt natürlich mehrmals auf, wie es durch die hochgestellten Indices 1 ... $n_R$ bei den Summenzeichen angezeigt ist, ebenso wie die Addition $35_1$ ... $35_{nR}$ und die komplexe Kanalbeeinflussung auf jeder der Wegstrecken zwischen den $n_R$ Antennen $34_1$ ... $34_{nR}$ und den K Sendeantennen $36_1$ ... $36_K$.

Auf Seiten des Funktionsempfängers 32 sind bei dem Ausführungsbeispiel von Fig. 5a-c im Vergleich zu dem Ausführungsbeispiel von Fig. 4a-c mehrere Antennen bzw. mehrere Empfangsantennen $34_1$-$34_{nR}$ vorgesehen, wobei natürlich, wie es im Vorhergehenden bereits beschrieben worden ist $n_R$ auch 1 sein könnte, wobei aber im Folgenden davon ausgegangen wird, dass $n_R \geq 1$ ist. Für jede Antenne $34_1$-$34_{nR}$ besitzt der Funktionsempfänger 32 neben einem jeweiligen Empfangsverstärker mit dem jeweiligen Empfängerrauschen $n_1$ ... $n_{nR}$, der in den Fig. 5a-c sowie auch in den Fig. 4a-c der Übersichtlichkeit halber nicht dargestellt ist, einen jeweiligen Empfangsleistungsbestimmer $64_1$-$64_{nR}$, der also beispielsweise durch Bildung des Betragsquadrats und Aufintegration des Empfangssignals eine Empfangsenergie und damit ein Maß für eine Empfangsleistung des Empfangssignals an der jeweiligen Antenne $34_1$-$34_{nR}$ bestimmt. Alternativ kann anstelle eines Quadrierers gefolgt von einem Integrator auch ein Abtastglied verwendet werden, das das komplexe Basisbandsignal am Eingang des Funktionsempfängers abtastet, und an den sich Quadrier und Aufsummierer zum Aufsummieren quadrierter Abtastwerte anschließen. Die so ermittelten Empfangsleistungen an den Antennen $34_1$-$34_{nR}$ werden an einem Summierer 80 aufsummiert und dienen als Grundlage für die nachfolgende weitere Verarbeitung, die gemäß der Empfängertypversion von Fig. 5b mit einem gegenüber dem Ausführungsbeispiel von Fig. 4b and 4c modifizierten Empfangsleistungsniveaueinsteller 68' beginnt, der nämlich die aufsummierte Empfangsleistung nicht nur mit $1/\alpha$ multipliziert, sondern hier exemplarisch auch durch die Anzahl der Antennen $n_R$ teilt. In der Signalkette von den Antennen $34_1$-$34_{nR}$ zu dem Ausgang 62 schließen sich im Anschluss an den modifizierten Empfangsleistungsniveaueinsteller 68' in der genannten Reihenfolge ein Kanalentzerrer 82, der Verarbeiter 66, der Nachverarbeitungstransformierer 70 und der Definitionsbereichsrückanpasser 72 an.

Die Kanalschätzung wird gemäß dem Ausführungsbeispiel von Fig. 5a empfangsseitig durchgeführt. Dazu senden die Funktionssender in intermittierend auftretenden Kanalschätzungsphasen jeweils Konstantleistungssignale aus, wie z.B. jeder der Funktionssender $30_1$-$30_K$ ein Signal mit für alle Sender $30_1$-$30_K$ gleicher Leistung. Die Konstantleistungssignale werden zeitlich überlappend durch die Funktionssender $30_1$-$30_K$ ausgesendet, wie z.B. im Rahmen der Synchronisationsgenauigkeit gleichzeitig, wobei die Synchronisationsgenauigkeit wie bei dem Ausführungsbeispiel von Fig. 4a-c reduziert sein kann. In den Antennen $34_1$-$34n_R$ ergibt sich deshalb bedingt durch die Eigenschaften des Mehrfachzugriffskanals 31 eine summierte Überlagerung der individuellen mit dem jeweiligen komplexen Kanaleinfluss veränderten Konstantleistungssignale plus dem jeweiligen Empfängerrauschen $n_n(t)$ für die jeweilige $n$-te Antenne $34_n$. Der Funktionsempfänger 32 besitzt nun keinen Pilotsender, aber dafür einen Kanalschätzer 90. Der Kanalschätzer 90 ist dazu vorgesehen, um aus einem in der Kanalschätzungsphase empfangenen Mehrfachzugriffskanal-Signal eine unten noch näher zu spezifizierende statistische Größe, die den Kanaleinfluss des Mehrfachzugriffskanals 31 statistisch beschreibt, zu schätzen und diese Größe an den Funktionsergebnisberechner 58 auszugeben. Der Entzerrer 82 empfängt von dem Kanalschätzer 90 aus der vorerwähnten statistischen Größe zur Beschreibung des Kanaleinflusses Informationen darüber, wie der gemittelte, von dem Modul 68' ausgegebene Empfangsleistungswert zu entzerren ist und gibt das Ergebnis an die Verarbeitungseinheit 66 weiter. Die Verarbeitungseinheit 66 führt ihrerseits wiederum in den Normalbetriebsphasen die Bezug nehmend auf Fig. 4a-c bereits beschriebene Korrektur der bestimmten Empfangsleistung mit dem jeweiligen Empfängerrauschen durch. Bereits vorher hat der Kanalentzerrer 82 für eine Korrektur der gemittelten Empfangsleistung mit dem Inversen des Kanaleinflusses gesorgt. In anderen Worten ausgedrückt, kehrt der Kanalentzerrer 82 auf Basis der von dem Kanalschätzer 90 gelieferten statistischen Größe den Einfluss des Mehrfachzugriffskanals 31 auf die zentrale Tendenz der ermittelten über die Empfangsantennen gemittelten Empfangsleistung wieder um bzw. gleicht sie aus. Details hierzu werden im Folgenden noch geliefert. Dabei wird auch deutlich werden, dass diese Korrektur des Kanaleinflusses sogar noch fernbleiben kann in Fällen, bei denen der Mehrfachzugriffskanal 31 bestimmte besondere Eigenschaften aufweist. Bei dem vorliegenden Ausführungsbeispiel führt der Kanalschätzer 90 seine Kanalschätzung auf Basis des gemittelten mit $1/\alpha$ sendeleistungskorrigierten Empfangsleistungswert durch, und zwar tut er dies intermittierend in den intermittierend auftretenden Kanalschätzungsphasen. Dazu weist der Kanalschätzer 90 den Kanalempfänger 82 in den Kanalschätzungsphasen an, das Eintreffen des gemittelten Empfangsleistungssignal unbeeinflusst zu lassen, und der Kanalschätzer 90 ist über einen Schalter 84 mit dem Ausgang des Kanalentzerrers 82 verbunden, der in den Kanalschätzungsphasen für eine Verbindung des Ausgangs des Kanalentzerrers 82 mit dem Eingang des Kanalschätzers 90 sorgt und in den Normalbetriebsphasen für ein Anlegen beispielsweise eines Nullsignals an den Eingängen des Kanalschätzers 90. Der Kanalschätzer 90 schätzt auf Basis des ankommenden gemittelten Empfangsleistungssignals statistische Größen, die den Kanaleinfluss des Mehrfachzugriffskanals 31 beschreiben, und legt einen entsprechenden diesen Kanaleinfluss invertierenden Wert über die Normalbetriebsphasen hinweg an den Kanalentzerrer 82 an, damit dieser den Kanaleinfluss invertiert. Zum Beispiel umfasst das Schätzen lediglich ein Erfassen der ankommenden, über die Empfangsantennen gemittelten Empfangsenergie bzw. -leistung in dem Fall eines Mehrfachzugriffsignals in der Kanalschätzungsphase, das einer Überlagerung von Sendesignalen konstanter und vor allem unter den Sendern 30 gleicher Leistung entspricht, weil die erfasste bzw. abgetastete mittlere Energie bzw. Leistung der Sendungen an der Empfangsantenne dem statistischen Moment zweiter Ordnung entspricht.

Einzelheiten dazu werden im Folgenden noch beschrieben.

Bei dem System von Fig. 5a werden also im Unterschied zu dem System von Fig. 4a,b die Kanalsender nicht tätig, um eine Vorentzerrung des Kanals vorzunehmen. Eine Vorentzerrung des Kanals an den Funktionssendern ist in dem Fall von Fig. 5a vielmehr überhaupt nicht möglich, da zwischen jedem Senderknoten und jeder Empfangsantenne ein eigener Kanalkoeffizient wirksam ist, während der Übertragung aber nur ein einziger Kanalparameter berücksichtigt werden kann. Aber auch in dem Fall von Fig. 5b gilt, dass die Verarbeitungseinheit 66 auch an einem anderen Ort innerhalb der Signalkette zwischen den Empfangsantennen und dem Ausgang des Funktionsempfängers 32 angeordnet sein kann. Auch hier in dem Fall von Fig. 5b kann beispielsweise die Wahl der Anordnung der Verarbeitungseinheit 66 innerhalb der Signalkette davon abhängig gemacht werden, welche gewünschte Funktion berechnet werden soll. Es ist zu beachten, dass erst die Summe über die Empfangsenergien an jeder Antenne gebildet wird und anschließend die Nachverarbeitungen, Definitionsbereichsrückanpassungen usw. angewendet werden. Der Kanalschätzer 90 ermittelt in den Kanalschätzungsphasen eine Information über statistische Parameter des Kanals, wie z.B. $\sigma_H^2 + |\mu_H|^2$ oder

$\sum_{n,k,m} \left( \left(\sigma_{nk}^{(m)}\right)^2 + \left|\mu_{nk}^{(m)}\right|^2 \right)$ wie es im Folgenden noch erläutert wird, und merkt sich diese Information, um sie bei den zwischenzeitlichen Normalbetriebsphasen zu verwenden.

Somit unterscheiden in dem Fall von Fig. 5a-5c die Funktionssender und der Funktionsempfänger sowohl des Typs nach Fig. 5b als auch des Typs nach Fig. 5c, bei dem im Unterschied zu dem Ausführungsbeispiel von Fig. 5b die Verarbeitungseinheit 66 zwischen dem Ausgang 62 und dem Definitionsbereichsrückanpasser 72 angeordnet ist, beispielsweise zwischen zwei Modi bzw. Phasen, nämlich dem Kanalschätzmodus, bei welchem die Funktionssender mit konstanter Energie $\varphi_k(R_k) = 1$, $k = 1,...,K$ senden, während der Kanalschätzer 90 des Empfängers 32 mit der entsprechenden Schätzung geladen wird, was der Schalterstellung "1" in Fig. 5b und 5c entspricht. In dem Normalbetrieb übertragen die Funktionssender 30 ihre vorverarbeiteten Meßwertinformationen, während der Empfänger 32 bzw. der Entzerrer 82 die Empfangsenergie mit dem Kehrwert des Inhaltes der CSI-Box gewichtet, wie z.B. $(\sigma_H^2 + |\mu_H|^2)^{-1}$

oder $\left( \sum_{n,k,m} \left( \left(\sigma_{nk}^{(m)}\right)^2 + \left|\mu_{nk}^{(m)}\right|^2 \right) \right)^{-1}$, was der Schalterstellung "0" in den Figuren 5b und 5c entspricht.

Der Rest des Aufbaus des Systems 88 von Fig. 5a-c ist zu demjenigen identisch, der Bezug nehmend auf Fig. 4a-c beschrieben worden ist, weshalb eine detaillierte Erörterung vorerst weggelassen werden soll, sondern vielmehr auf ein paar Simulationsergebnisse und auf eine mathematische Darstellung der zugrunde liegenden Ideen der obigen Ausführungsbeispiele eingegangen werden soll.

Obige Ausführungsbeispiele zeigten Möglichkeiten dafür, wie z.B. ein drahtloses Sensornetzwerk oder aber irgend ein anderes Netzwerk als eine Sammlung von Sensor- bzw. Sendeknoten aufgefasst werden kann, die bestimmte Informationsquellen überwachen oder auslesen oder dergleichen, die so aufgegriffenen Daten verarbeiten und dieselben an einen Senkenknoten oder Empfangsknoten senden, und zwar mit dem Ziel der Berechnung einer Funktion der Messwerte bzw. der anders erhaltenen Werte an dem Empfangsknoten. Zu diesem Zweck wird anders als bei der in der Beschreibungseinleitung beschriebenen Lösung, die den zugrunde liegenden Fading- bzw. Schwächungsmehrfachzugriffskanal unter kompletter Schätzung der Kanalzustandsinformationen, im Folgenden als Voll-CSI (Channel State Information = Kanalzustandsinformation) bezeichnet, ausnützt, das Problem adressiert, dass der Kanalschätzungsaufwand verringert werden soll. Im Folgenden wird eine Begründung dafür geliefert werden, dass es möglich ist, weniger Kanalzustandsinformation zu verwenden, wie z.B. an den Sensorknoten, um effektiv gute Schätzungen zu erhalten. Der folgende Nachweis wird beispielsweise ergeben, dass es keinen Leistungsfähigkeitsverlust nach sich zieht, und zwar unabhängig von den Fading-Verteilungen, wenn anstatt einer perfekten bzw. komplexwertigen Kanalzustandsinformation jedem Sensorknoten lediglich der Betrag eines jeweiligen Kanaleinflusses, wie z.B. Kanalkoeffizienten, zur Verfügung steht. Es wird auch gezeigt werden, dass in dem Fall spezifischer unabhängig verteilter Fading-Umgebungen und insbesondere in dem Fall mehrerer Antennenelemente an dem Empfangsknoten, das Wissen um die Kanalzustandsinformation an den Sensorknoten nicht erforderlich ist, und eine sehr einfache und trotzdem sehr effektive Korrektur der Fading-Effekte empfangsseitig durchgeführt werden kann, und zwar basierend auf einem gewissen, im Folgenden noch näher erörterten statistischen Kanalwissen. In einigen Fällen verbessert das Fading die Schätzungsgenauigkeit aufgrund der Mehrfachzugriffsnatur des zugrunde liegenden Kanals.

Eine grundlegende Annahme in den in der Beschreibungseinleitung der vorliegenden Anmeldung erwähnten Artikeln war, wie oben ausgeführt, eine perfekte Kenntnis der komplexwertigen Kanalzustandsinformation an den Sensorknoten vor den Übertragungen, was im Folgenden als "Voll-CSI" bezeichnet wird, so dass jeder Knoten in der Lage war, seinen eigenen Kanal zu dem Empfangsknoten perfekt zu invertieren bzw. eine perfekte Vorverzerrung durchzuführen. Im Folgenden wird zunächst die Beeinträchtigung des sich ergebenden Funktionsergebniswertes an dem Empfangsknoten aufgrund von Fadings analysiert und die Frage adressiert, wie viel Kanalzustandsinformation an den Sensorknoten oder den Empfangsknoten überhaupt notwendig ist. Es wird gezeigt werden, dass unabhängig von den Fading-Verteilungen, der Betrag der Kanalkoeffizienten ausreichend ist, um die Schätzung ohne Leistungsfähigkeitseinbußen im Vergleich zu Voll-CSI durchzuführen. Diese erleichterte Variante der Kanalschätzung wird mit "Modulus CSI" bezeichnet, wobei hier "Modulus" für "Betrag" steht. Darüber hinaus wird gezeigt werden, dass für spezifische unabhängig verteilte Fading-Umgebungen die Kanalschätzungsinformation an dem Sensorknoten überhaupt nicht notwendig ist, und die Fading-Effekte unter Verwendung der statistischen Kanalkenntnis zweiter Ordnung empfangsseitig korrigiert werden können. Die Ergebnisse untermauern folglich das, was bereits in den vorhergehenden Ausführungsbeispielen ausgenutzt worden ist, nämlich dass die Menge an Kanalkenntnis an den Knoten verglichen zu der perfekten Kanalkenntnis signifikant reduziert werden kann, und zwar ohne Leistungsfähigkeitsverluste, was gleichbedeutend ist mit einer reduzierten Komplexität und einer viel höheren Energieeffizienz des gesamten Netzwerkes.

Vorab wird darauf hingewiesen, dass im Folgenden $(\cdot)^T$ eine Transponierte, $(\cdot)^H$ eine hermitesch Transponierte und $(\cdot)^*$ das komplex Konjugierte des jeweiligen Klammerausdrucks bedeutet. Der real- und komplexwertige Anteil von Normalverteilungen mit Mittelwert $\mu$ und Varianz $\sigma^2$ werden mit $\mathcal{N}_R(\mu,\sigma^2), \quad \mathcal{N}_C(\mu,\sigma^2)$ bezeichnet und $\oplus$ bezeichnet die direkte Summe der betreffenden Matrizen.

Im Folgenden werde ein drahtloses Sensornetzwerk als ein Beispiel für eines der möglichen Systeme beschrieben, wo die obigen Ausführungsbeispiele verwendet werden können, und dieses Sensornetzwerk bestehe aus $K \in N$ identischen räumlich verteilten Einantennensensorknoten und einem bestimmten Empfangsknoten, der mit $n_R \in N$ Antennenelementen ausgestattet sei. Dieses Sensornetzwerk bietet stellvertretend für andere mögliche Netzwerke die Basis der nachfolgenden Überlegungen.

Gegeben sei ein geeigneter Wahrscheinlichkeitsraum $(\Omega, \mathcal{A}, \mathbb{P})$ mit dem Ereignisraum $\Omega$, $\sigma$-Algebra $\mathcal{A}$ und einem Wahrscheinlichkeitsmaß $\mathbb{P}$, über das alle auftretenden Zufallsvariablen und stochastischen Prozesse definiert seien. Jeder Sensorknoten besitze die Aufgabe, ein bestimmtes physikalisches Phänomen, z.B. Temperatur oder Druck oder dergleichen, zu überwachen, und diese Überwachungen seien im Folgenden als über die Zeit $t$ zeitdiskrete stochastische Prozesse $X_k(t) \in \bar{\mathcal{X}}$, $k = 1,...,K$, $t \in Z_+$ modelliert, wobei $\mathcal{X} = [x_{\min}, x_{\max}] \subset R$ den physikalischen Messbereich bezeichne, d.h. den Bereich, in welchem Messergebnisse der physikalischen Phänomenbeobachtungen liegen. Schließlich sei ohne Beschränkung der Allgemeinheit angenommen, dass die Sensorabfragewerte bzw. Sensorwerte $\mathbf{x}(t) := (X_1(t),...,X_K(t))^T \in \mathcal{X}^K$ unabhängig und identisch verteilt seien, was im Folgenden mit "i. d. d." für "independent and identically distributed" abgekürzt wird, also wie in einem Szenario, wo die Sensoren identische Werte beobachten, und zwar unter der Voraussetzung von i. d. d. Beobachtungsrauschen.

Nach diesen Vorgaben steht nun nichts mehr im Wege, eine für die nachfolgenden Betrachtungen wichtigen Grundstein für dienachfolgenden Betrachtungen in einer präzisen Form zu legen.

Definition 1 (SIMO-WS-MAC) Es bezeichne $\mathbf{x}(t) \in \mathcal{X}^K$, $t \in Z_+$ die erfassten Daten, $n_R \in N$ die Anzahl von Empfangsantennen des Empfangsknotens und die Sensorknoten seien auf eine Spitzenleistungsbeschränkung von $P_{\max} \in R_{++}$ beschränkt. Es sei zudem $H_{nk}(t)$, $n = 1,...,n_R$; $k = 1,...,K$ ein komplex-wertiger Flat-Fading-Prozess bzw. ein Prozess mit schwachem Schwund zwischen dem $k$-ten Sensor und dem $n$-ten Empfangsantennenelement, und $N_n(t)$, $n = 1,...n_R$, bezeichne den zeitdiskreten stationären Empfängerrauschprozess am Antennenelement $n$. Ferner sei angenommen, dass die Daten, das Fading bzw. der Schwund und das Rauschen untereinander unabhängig sind. Wenn dies so ist, bezeichnen wir die Vektor-wertige Abbildung

$$(X_1(t),...,X_K(t)) \mapsto (Y_1(t),...,Y_{n_R}(t)) \in C^{n_R},$$

$$Y_n(t) = \sum_{k=1}^{K} H_{nk}(t) X_k(t) + N_n(t), n = 1,...,n_R, \tag{1}$$

als den SIMO-Drahtlos-Sensor-Mehrfachzugriffskanal (SIMO-WS-MAC). Für $n_R = 1$ wird dieser Kanal einfach als WS-MAC bezeichnet.

Der SIMO-WS-MAC ist eine Sammlung von $K$ SIMO-Verbindungen, die die gemeinsame Funkschnittstelle pro Mehrfachzugriff teilen. Gl. 1 bietet die mathematische Charakteristik des WS-MAC, nämlich die Summation, die explizit für die gewünschte Funktionsberechnung verwendet werden kann, falls eine Übereinstimmung zwischen der gewünschten Funktion und dem zugrunde liegenden Mehrfachzugriffskanal vorliegt.

**Definition 2 (gewünschte Funktion)** $\mathcal{F}_D$ ist die Menge von gewünschten Funktionen $f : \mathcal{X}^K \to R$ von gemessenen Sensordaten.

**Definition 3 (Vorverarbeitungsfunktionen)** Definiert seien die Funktionen $\varphi_k : \mathcal{X} \to R$, $k = 1,...,K$, die an den erfassten Daten $X_k(t) \in \mathcal{X}$ als die Vorverarbeitungsfunktionen wirksam sind.

**Definition 4 (Nachverarbeitsfunktion)** Es sei $Y(t) \in C$ das Ausgangssignal des WS-MAC. Dann definiert die injektive Funktion $\psi : R \to R$, die auf $Y(t)$ wirkt, die Nachverarbeitungsfunktion.

**Bemerkung 1** Die Vor- und Nachverarbeitungsfunktionen, die offensichtlich von der gewünschten Funktion abhängen, transformieren den WS-MAC auf eine solche Art und Weise, dass die resultierende mathematische Charakteristik des Gesamtkanals die Charakteristik der gewünschten Funktion annimmt. In dem Fall des geometrischen Mittelwertes als der gewünschten Funktion (vgl. Beispiel 1) ist beispielsweise der Gesamtkanal ein multiplikativer Mehrfachzugriffkanal. Deshalb besitzt die Menge von gewünschten Funktionen in theoretischem Sinne die Form

$$\mathcal{F}_D = \{f(\mathbf{x}(t)) | f(\mathbf{x}(t)) = \psi(\sum_k \varphi_k(X_k(t)))\}.$$

**Beispiel 1** (i) Arithmetischer Mittelwert: $f(\mathbf{x}(t)) = \dfrac{1}{K}\sum_{k=1}^{K} X_k(t)$ mit Vorverarbeitungsfunktionen $\varphi_k(X_k(t))$

$$\psi(Y(t)) = \frac{1}{K}Y(t).$$

$= \varphi(X_k(t)) = X_k(t)$, $k = 1,...,K$ und Nachverarbeitungsfunktionen

(ii) Geometrischer Mittelwert: $f(\mathbf{x}(t)) = (\prod_{k=1}^{K} X_k(t))^{\frac{1}{K}}$, $X_k(t) > 0 \;\forall k, t$ mit den Vorverarbeitungsfunktionen $\varphi_k(X_k(t))$

$= \varphi(X_k(t)) = \log_a(X_k(t)) \;\forall k, t$, und einer Nachverarbeitungsfunktion $\psi(Y(t)) = a^{\frac{1}{K}Y(t)}$, wobei $a$ eine willkürliche Basis sei.

Das Problem, das sich nun stellt, und im Folgenden analysiert wird, besteht in Folgendem: Wie können die Elemente von $\mathcal{F}_D$ unter der Verwendung des SIMO-WS-MAC auf eine Energie-effiziente und zuverlässige Art und Weise berechnet werden, und zwar mit einer minimalen Menge an benötigter Kanalkenntnis?

Da eine präzise Symbol- und Phasensynchronisation, wie sie bei dem in der Beschreibungseinleitung der vorliegenden Anmeldung beschriebenen Lösungsansatz von Nazer und Gastpar beschrieben wird, in der Realität und insbesondere für großen Sensornetze schwierig zu erzielen ist, wird nachfolgend der Lösungsansatz betrachtet, wonach für die Funktionswertübertragung zu einem Zeitpunkt $t$ jeder Sensorknoten eine komplexwertige Übertragungssequenz der Länge $M \in N$ mit einem Einheitsmaß erzeugt, so dass beispielsweise für den $k$-ten Sensor $\mathbf{s}_k(t) = (S_{k1}(t),...,S_{km}(t))^T$ $\in C^M$, $k = 1...,K$ und $\| \mathbf{s}_k \|_2^2 \;\forall k$ gilt. Die vorverarbeitete Sensorinformation $\varphi(X_k(t))$ wird dann als eine Übertragungsenergie für die erzeugte Sequenz $\mathbf{s}_k(t) \;\forall k$ verwendet. Da die Übertragungsleistungen positive reelle Zahlen sind, muss sichergestellt werden, dass $\varphi_k(X_k(t)) \geq 0 \;\forall k, t$ gilt. Folglich ändern wir die Domänen von $\varphi_k$ durch eine bijektive Funktion $g : \mathcal{X} \to \mathcal{R}$, d.h. $R_k(t) := g(X_k(t))$, die von $\varphi$ so abhängt, dass $\mathcal{R}$ die neue Domäne ist, die die Anforderung für alle $k, t$ erfüllt. Für nähere Details wird auf das in der Beschreibungseinleitung der vorliegenden Anmeldung genannte Paper von Goldenbaum, Stanczak und Kaliszan verwiesen.

Der Einfachheit halber - aber ohne Einschränkung der Allgemeinheit - wird im Folgenden angenommen, dass eine perfekte Block-Synchronisation vorliegt, obwohl dies nicht notwendig ist, wie es bereits Bezug nehmend auf Fig. 4 beschrieben worden ist. Durch die Annahme kann allerdings das m-te Ausgangssymbol des SIMO-WS-MAC an Antenne $n$ geschrieben werden als

$$Y_{nm}(t) = \sum_{k=1}^{K} H_{nk}^{(m)}(t)\sqrt{\alpha\varphi_k(\overline{R_k(t)})}S_{km}(t) + N_{nm}(t), \qquad (2)$$

$n = 1,...,n_R; m = 1,...,M.$ Dabei ist zu beachten, dass die Synchronisationsannahme bereits deshalb nicht notwendig ist, weil der beschriebene Lösungsansatz relativ robust gegen Ungenauigkeiten in der Blocksynchronisation ist. Die Konstante $\alpha > 0$, die auch bereits Bezug nehmend auf Fig. 4 und 5 erwähnt worden ist, stellt Übertragungsleistungsbeschränkungen sicher, d.h. $\quad 0 \le \dfrac{\alpha\varphi(R_k(t))}{M} \le P_{\max}, \quad$ während $\quad N_{nm}(t) \sim \mathcal{N}_C(0, \dfrac{1}{M}\sigma_N^2) \quad \forall n,m,t$ mit unabhängigegn Real-Imaginäranteilen mit wiederum ihrerseits Varianz $\dfrac{1}{2M}\sigma_N^2,$ das Empfängerrauschen an der $n$-ten Antenne und für das $m$-te Symbol beschreibt. Die Kanalausgangssignale seien in der Matrix $\mathbf{Y}(t) = (Y_{nm}(t)) \in C^{n_R \times M}$, zusammengefasst, die Kanalkoeffizienten in einer Sequenz von $M$ Matrizen $\mathbf{H}_m(t) = (H_{nk}^{(m)}(t)) \in C^{n_R \times K},$ die $K$ Übertragungssequenzen in einer Matrix $\mathbf{S}(t) := (\mathbf{s}_1(t),...,\mathbf{s}_K(t))^T \in C^{K \times M}$, die additiven Rauschterme in $\mathbf{N}(t) = (N_{nm}(t)) \in C^{n_R \times M}$ und die

$K$ Übertragungsleistungen in die Diagonalmatrix $\mathbf{F}(t) := \mathrm{diag}(\Phi_1(t),...,\Phi_K(t)) \in R_+^{K \times K},$ wobei

$\Phi_k(t) := \sqrt{\alpha\varphi_k(R_k(t))},$ $k = 1,...,K,$ gelte, so dass alle Empfangssignale (2) in einer Vektorgleichung

$$\mathrm{vec}(\mathbf{Y}(t)) = \left(\bigoplus_{m=1}^{M}\mathbf{H}_m(t)\right)\mathrm{vec}(\mathbf{F}(t)\mathbf{S}(t)) + \mathrm{vec}(\mathbf{N}(t)). \qquad (3)$$

erfassbar sind.

Falls ferner $\tilde{\mathbf{y}}(t) := \mathrm{vec}(\mathbf{Y}(t)) \in C^{n_R M}, \tilde{\mathbf{s}}(t) := \mathrm{vec}(\mathbf{F}(t)\mathbf{S}(t)) \in C^{MK}, \tilde{\mathbf{n}} := \mathrm{vec}(\mathbf{N}(t)) \in C^{n_R M}$, definiert wird und

$$\tilde{\mathbf{H}}(t) := \bigoplus_{m=1}^{M}\mathbf{H}_m(t) = \begin{pmatrix} \mathbf{H}_1(t) & \mathbf{0} & \mathbf{0} & \mathbf{0} \\ \mathbf{0} & \mathbf{H}_2(t) & \mathbf{0} & \mathbf{0} \\ \vdots & \vdots & \ddots & \vdots \\ \mathbf{0} & \mathbf{0} & \mathbf{0} & \mathbf{H}_M(t) \end{pmatrix}, \qquad (4)$$

gilt, wobei $\tilde{\mathbf{H}}$ ein Element von $C^{Mn_R \times MK}$, ist, reduziert sich Gleichung (3) zu

$$\tilde{\mathbf{y}}(t) = \tilde{\mathbf{H}}(t)\tilde{\mathbf{s}}(t) + \tilde{\mathbf{n}}(t). \qquad (5)$$

Im Folgenden wird die explizite Angabe des Messzeitpunktes $t$ weggelassen.
Um die gewünschten Funktionswerte aus Gleichung (5) zu erhalten, wird zunächst die empfangende Summenenergie, d.h. die Summer über alle Antennen und Symbole, berechnet, d.h.

$$\tilde{\mathbf{y}}^H\tilde{\mathbf{y}} = \frac{\alpha}{M}\sum_{n=1}^{n_R}\sum_{m=1}^{M}\sum_{k=1}^{K}|H_{nk}^{(m)}|^2\,\varphi_k(R_k) + \sum_{n=1}^{n_R}\Delta_{1,n}(\tilde{\mathbf{H}},\mathbf{F},\mathbf{S})$$

$$+ \sum_{n=1}^{n_R}\Delta_{2,n}(\tilde{\mathbf{H}},\mathbf{F},\mathbf{S},\mathbf{N}) + \sum_{n=1}^{n_R}\Delta_{3,n}(\mathbf{N}), \qquad (6)$$

gefolgt von einfachen Berechnungen, die eine Anwendung von $\psi$, $g^{-1}$, umfassen. Die Fehlerterme in Gleichung (6) sind

$$\Delta_{1,n}(\tilde{\mathbf{H}},\mathbf{F},\mathbf{S}):=\sum_{m=1}^{M}\sum_{k=1}^{K}\sum_{\substack{\ell=1\\\ell\neq k}}^{K}(H_{nk}^{(m)})^{*}H_{n\ell}^{(m)}\Phi_{k}\Phi_{\ell}S_{km}^{*}S_{\ell m} \qquad (7)$$

$$\Delta_{2,n}(\tilde{\mathbf{H}},\mathbf{F},\mathbf{S},\mathbf{N}):=2\sum_{m=1}^{M}\sum_{k=1}^{K}\Phi_{k}\,\mathrm{Re}\{H_{nk}^{(m)}S_{km}N_{nm}^{*}\} \qquad (8)$$

$$\Delta_{3,n}(\mathbf{N}):=\sum_{m=1}^{M}|N_{nm}|^{2}\,, \qquad (9)$$

welche im Folgenden auch zu dem Gesamtsummensummand

$$\tilde{\Delta}(\tilde{\mathbf{H}},\mathbf{F},\mathbf{S},\mathbf{N}):=\sum_{n=1}^{n_R}\left(\Delta_{1,n}+\Delta_{2,n}+\Delta_{3,n}\right). \qquad (10)$$

zusammengefasst werden.

Eine adäquate Erzeugung von Sequenzen $\mathbf{s}_k$, $k = 1,...,K$, die die Fehlerterme $\Delta_{1,n}$, $\Delta_{2,n}$ gleichzeitig reduzieren, ist eine Sache des Sequenzdesigns, d.h. eine Frage der Generierung von geeigneten Sequenzen, die jetzt im Folgenden nicht weiter betrachtet wird aber natürlich machbar wäre. Die Möglichkeit, die im Folgenden aufgegriffen wird, besteht darin, die Elemente von $\mathbf{s}_k(t)$ auf eine Art und Weise zu wählen, so dass dieselben wie unkorreliertes Rauschen wirken, derart, dass $\Delta_{1,n}$, $\Delta_{2,n}$ im Mittel verschwinden. Folglich erzeugen die Knoten für jedes $m = 1,...,M$ die Sequenzelemente $S_{km}(t) = M^{-1/2}e^{i\Theta_{km}(t)}$, also

$$\mathbf{S_k}(t)=\left(S_{k1}(t),...,S_{kM}(t)\right)^{T}=\frac{1}{\sqrt{M}}\left(e^{j\Theta_{k1}(t)},...,e^{j\Theta_{kM}(t)}\right)^{T}\quad\forall k$$

wobei $i^2 = -1$ and $\Theta_{km}(t)$ i. i. d. gleichverteilt in $[0,2\pi)$ $\forall k,m,t$ ist.

Im Folgenden wird nun der Einfluss von Fading-Effekten auf die Berechnung von Funktionen über einen WS-MAC analysiert, und zwar unter Verwendung des Schemas, das soeben im Vorhergehenden beschrieben worden ist. In diesem Zusammenhang werden unterschiedliche Annahmen bezüglich der Kanalkenntnis an den Sensorknoten und dem Empfangsknoten getroffen. Darüber hinaus wird das In-Betracht-Ziehen von mehreren Antennen an dem Empfänger legitimiert, indem gezeigt wird, dass in spezifischen Fading-Umgebungen mehrere Antennen die Funktionsrekonstruktionsqualität verbessern und darüber hinaus den Kanalschätzungsaufwand enorm reduzieren, wobei aber andererseits darauf hingewiesen wird, dass im Folgenden Kanalschätzungsfehler aus den Betrachtungen ausgenommen sind.

Zunächst wird der spezielle Fall $n_R=1$ betrachtet. Das Verhalten des WS-MAC (vgl. Definition 1) ergibt, dass keine Art von sofortiger Kanalkenntnis auf Empfängerseite dazu verwendet werden kann, Fading-Effekte zu korrigieren, da der Empfangsknoten Zugriff auf lediglich eine verrauschte Linearkombination (2) aufweist aber eben nicht Zugriff auf jeden einzelnen Term in der Summe. Folglich wurde in den in der Beschreibungseinleitung der vorliegenden Anmeldung erwähnten Lösungsansätzen davon ausgegangen, dass die "komplexen" Kanalkoeffizienten an den Sensorknoten geschätzt wurden, um den Kanal vor der Übertragung zu invertieren, was vorliegend als "Voll CSI" bezeichnet wird und beispielsweise durchgeführt werden könnte, indem der Senkenknoten Funktionswertübertragungen durch Pilotsequenzen initiiert. Gemäß Voll-CSI würde der $k$-te Sensor, $k=1,..., K$, $\sqrt{\alpha\varphi_k(R_k)}S_{km}/H_{1k}^{(m)}$ $\forall m$, $|H_{1k}^{(m)}|>0$, übertragen, was im Folgenden als Messlatte für die Ausführungsbeispiele dient, wonach weniger Kanalzustandsinformation verwendet wird. Dabei sei aber darauf hingewiesen, dass durch sorgfältige Auswahl eines Faktors $\alpha > 0$ sichergestellt werden sollte, dass $\dfrac{\alpha\varphi_k(R_k(t))}{M|H_{1k}^{(m)}|^{2}}\leq P_{\max}$, gilt, um die Übertragungsleistungsbeschränkungen an den Knoten zu erfüllen.

Der Ansatz des Setzens der Übertragungsenergie der Zufallssequenzen gemäß den bzw. auf die verarbeiteten Sensordaten hat den Vorteil, dass der erste Summand in der Gleichung (6), d.h. $\frac{\alpha}{M}\sum_{n,m,k}|H_{nk}^{(m)}|^2\,\varphi_k(R_k)$ - was der interessierende Term in der gesamten Empfangsenergie ist - lediglich durch das "Betragsquadrat" der Momentankanalkoeffizienten beeinflusst wird. Folglich stellt sich die Frage: ist eine Schätzung der komplexen Kanalkoeffizienten, was eine sensitive Phasenschätzung erforderte, an den Sensorknoten notwendig oder ist es ausreichend, lediglich die Absolutwerte der Kanalkoeffizienten zu schätzen, welche Vorgehensweise im Folgenden als "Modulus-CSI" bezeichnet wird? Dies würde offensichtlich eine Verbesserung im Hinblick auf den Kanalschätzungsaufwand und die Kanalschätzungsgenauigkeit bedeuten, und im Folgenden wird gezeigt, dass diese Vorteile durch Modulus-CSI tatsächlich erreichbar sind.

Essenziell für den Fall der perfekten Kanalinversion durch Voll-CSI ist die Tatsache, dass der gesamte Fehlerterm (10) den Erwartungswert $\sigma_N^2$, aufweist, da auf einfache Weise gezeigt werden kann, dass $\Delta_{1,1}$, $\Delta_{2,1}$ einen Mittelwert bzw. eine zentrale Tendenz von Null besitzen und

$$\mathbb{E}\{\Delta_{3,1}\} = \sigma_N^2$$

gilt. Dies ist notwendig, um einen erwartungstreuen Schätzer $\hat{f}$ für die gewünschte Funktion $f$ an dem Empfänger auf der Basis der Gleichung (6) zu formulieren, da $\sigma_N^2$ für die Senke bzw. den Empfänger bekannt ist und von demselben einfach abgezogen werden kann (vgl. 66 in Fig. 4b,c und 5b,c). Die Frage ist aber, ob ein solcher Schätzer auch für den Fall von Modulus-CSI erwartungstreu ist, d.h. für den Fall, dass der $k$-te Sensor $\sqrt{\alpha\varphi_k(R_k)}S_{km}/\left|H_{1k}^{(m)}\right|$ überträgt anstatt $\sqrt{\alpha\varphi_k(R_k)}S_{km}/H_{1k}^{(m)}$. Um diese Frage zu beantworten, müssen die Fehlerterme $\Delta_{1,1}$ (7) und $\Delta_{2,1}$ (8) analysiert werden, die von Kanalkoeffizienten abhängen. Es ist offensichtlich, dass $\mathbb{E}\{\Delta_{2,1}\}\equiv 0$, gilt, da die Rauschterme $N_{1m}$, $m = 1,...,M$, mit Mittelwert Null unabhängig von den Sensorauslesewerten und dem Fading sind. In dem Fall von $\mathbb{E}\{\Delta_{1,1}\}$ ist dies nicht unmittelbar klar, so dass es im Folgenden bewiesen wird.

**Proposition 1** Es sei $H_{1k}^{(m)}$, $|H_{1k}^{(m)}|> 0$ der zufällige komplexe Kanalkoeffizient zwischen dem $k$-ten Sensorknoten und dem Empfänger beim Empfangssymbol $m$. Dann können ohne jegliche Leistungsfähigkeitseinbussen die Kanäle durch den Betrag $|H_{1k}^{(m)}|$ vor den Übertragungen $\forall k,m$ korrigiert werden, und zwar unabhängig von den Fading-Verteilungen.

Um diese Proposition zu beweisen, ist der folgende Hilfssatz nützlich.

**Hilfssatz 1** Seien $A,B$ reelle unabhängige Zufahlsvariablen. Falls eine von beiden in $[0,2\pi]$ gleichverteilt ist, dann ist die reduzierte Summe $C = (A + B)\,mod\,2\pi$ ebenfalls in $[0, 2\pi]$ gleichverteilt, unabhängig von der Verteilung der anderen Zufallsvariablen.

Der Beweis des Hilfssatzes 1 ist ohne Weiteres erbringbar, wird an dieser Stelle aber weggelassen. Der Beweis der Proposition 1 kann wie folgt erbracht werden. Falls die komplexen Fading-Koeffizienten zwischen dem $k$-ten Sensor, $k=1,..., K,$ und dem Senkenknoten bei Symbol $m, m = 1,...,M,$ in Polarform geschrieben werden, $H_{1k}^{(m)} =| H_{1k}^{(m)} |\,e^{i\Lambda_{1k}^{(m)}}$, wobei $\Lambda_{1k}^{(m)}$ die korrespondierende Zufallsphase ist, dann kann die Gleichung (7) unter Verwendung von Modulus-CSI als

$$\Delta_{1,1} = \frac{2}{M}\sum_{\ell=2}^{K}\sum_{k=1}^{\ell-1}\sum_{m=1}^{M}\Phi_\ell\Phi_k\cos(\underbrace{\Lambda_{1\ell}^{(m)} - \Lambda_{1k}^{(m)}}_{=:\Delta\Lambda_{\ell k}^{(m)}} + \underbrace{\Theta_{\ell m} - \Theta_{km}}_{=:\Delta\Theta_{\ell k}^{(m)}}). \qquad (11)$$

geschrieben werden. Es ist nicht überraschend, dass die Absolutwerte der Kanalkoeffizienten herausfallen bzw. eliminiert werden, aber die Zufallsphasen der Fading-Koeffizienten immer noch die Funktionswertqualität beeinflussen. Es sei

$$Z_{\ell k}^{(m)} := \Delta\Lambda_{\ell k}^{(m)} + \Delta\Theta_{\ell k}^{(m)}, \quad C_{\ell k}^{(m)} := \cos(Z_{\ell k}^{(m)})$$ und zudem darauf hingewiesen, dass die $Z_{\ell k}^{(m)}$ Zufallsvariablen reduziert mit $\mathrm{mod}2\pi$ sind.

Eine ausreichende Bedingung für $\mathbb{E}\{\Delta_{1,1}\}=0$, ist

$$\mathbb{E}\{C_{\ell k}^{(m)}\} = 0 \,\forall \ell, k, m\,,$$

was für jedwede Verteilungen von Phasendifferenzen $\Delta\Lambda_{\ell k}^{(m)}$ gültig sein sollte.

Da gemäß Hilfssatz 1 $\Theta_{\ell m}$, $\Theta_{km}$ unabhängig und identisch in $[0,2\pi)$ $\forall m,k,\ell \neq k$ gleichverteilt sind, sind die Differenzen $\Delta\Theta_{\ell k}^{(m)}$ ebenfalls gleichverteilt in $[0,2\pi)$. Darüber hinaus sind $\Delta\Theta_{\ell k}^{(m)}$ und $\Delta\Lambda_{\ell k}^{(m)}$ in Gleichung (11) stochastisch unabhängig $\forall m,k,\ell \neq k,$ und eine wiederholte Anwendung von Hilfssatz 1 zeigt, dass alle $Z_{\ell k}^{(m)}$ gleichverteilt in $[0,2\pi)$ sind. Folglich gilt

$$\mathbb{E}\{C_{\ell k}^{(m)}\} = 0\,,$$

$\forall m,k,\ell \neq k,$ da die Dichte von Kosinus-Funktionen mit in $[0,2\pi)$ gleichverteilten Zufallsargumenten um Null herum symmetrisch sind, was durch eine allgemeine Zufallsvariablentransformation bewiesen werden kann. Schließlich folgt aus der Linearität des Erwartungswertoperators und der Unabhängigkeit zwischen den $C_{\ell k}^{(m)}$ und den Sensorauslesewerten, dass $\mathbb{E}\{\Delta_{1,1}\}\equiv 0$ gilt.

Die vorhergehenden soeben gemachten Ausführungen zeigen also, dass eine reduzierte Kanalschätzung auf Seiten der Sender, die lediglich den Betrag des komplexen Kanaleinflusses berücksichtigt, ohne Einbussen in Funktionsergebnisgenauigkeit aber dafür mit immensen Einsparungen an Kanalschätzungsaufwand bzw. Genauigkeitsgewinn in der durchzuführenden Kanalschätzung möglich ist.

Im Folgenden wird gezeigt, dass in dem Fall unabhängiger Fading-Verteilungen keine Kanalkenntnis an den Sensorknoten notwendig ist, falls der Senkenknoten eine gewisse statistische Kenntnis um die Fading-Koeffizienten besitzt. Ein korreliertes Fading wird hier nicht weiter erörtert, aber auch bei korreliertem Fading wäre ggf. Modulus-CSI oder Kein-CSI, wie der Fall des Fehlens von Kanalschätzung auf Seiten der Sender im Folgenden bezeichnet wird, möglich. In anderen Worten ausgedrückt, wenn lediglich Elemente $\mathcal{F}_{\mathrm{D}}$ mit der Eigenschaft $\varphi_1 = \cdots = \varphi_K = \varphi$ betrachtet werden, so dass neben den abgebildeten i. i. d. Sensorauslesewerten $R_k = g(X_k)$ auch die vorverarbeiteten Sensordaten $\varphi(R_k)$ i. i. d sind, verhilft das Mittelungsverhalten des SIMO-WS-MAC selbst dazu, den Kanalschätzungsaufwand dramatisch zu reduzieren.

Es sei angenommen, dass die Fading-Koeffizienten während der Übertragung jeglicher Sequenz der Länge $M$ konstant sind. Für den speziellen Fall des Block-Fadings reduziert sich die direkte Summe in Gleichung (4) auf das Kronecker-Produkt $\tilde{\mathbf{H}} = \mathbf{I}_M \otimes \mathbf{H}$, wobei $\mathbf{H} \in C^{n_R \times K}$ gelte und $\mathbf{I}_M$ die $M \times M$ Identitätsmatrix sei. Ferner sei angenommen, dass die Fading-Elemente $H_{nk}$ von $\mathbf{H}$, die nun unabhängig von $m$ sind, unabhängig und identisch verteilte Zufallsvariablen mit endlichen ersten absoluten Momenten $E\{H_{11}\} = E\{H_{nk}\} = \mu_H$, $\mathrm{Re}\{\mu_H\}$, $\mathrm{Im}\{\mu_H\} < \infty$, und endlichen Varianzen

$$Var\{H_{11}\} = Var\{H_{nk}\} = \sigma_H^2 > 0\,.$$ Dann kann die mathematische Charakteristik des SIMO-WS-MAC explizit durch den Senkenknoten verwendet werden, um Fading-Effekte in dem ersten Ausdruck aus Gleichung (6) zu korrigieren, was den Kanalschätzungsaufwand signifikant im Vergleich sowohl zur Voll- als auch zu Modulus-CSI reduziert.

Proposition 2 Es existiere das erste absolute Moment von $|H_{11}|^2\,\varphi(R_1)$ und der Erwartungswert $\mathbb{E}\{\varphi(R_1)\}$ und zudem seien $K, n_R$ ausreichend groß. Dann sind, falls $\sigma_H^2$ und $\mu_H$ dem Empfangsknoten bekannt sind, die Leistungsfähigkeitverluste aufgrund des Fehlens der CSI an den Sendeknoten beliebig klein, vorausgesetzt, dass Gleichung (6)

durch $\sigma_H^2 + |\mu_H|^2$ an dem Empfangsknoten dividiert wird (vgl. 82 in Fig. 5b,c).

**Korollar 1** Für den Fall $\sigma_H^2 + \mu_H^2 = 1$ und in dem Fall, dass $n_R$, $K$ ausreichend groß sind, ist keine Kanalkorrektur notwendug.

**Bemerkung 2** Proposition 2 und Korollar 1 stellen lediglich Ergebnisse für das Verhalten des ersten Terms in Gleichung (6) dar, welches der interessienrede Term ist, und sagen nichts über das Verhalten der Fehlerterme $\Delta_{1,n}$, $\Delta_{2,n}$, $n = 1,...,n_R$ aus. Falls da aber z.B. determiistische Komponenten in den Kanalstatistiken vorhanden sind, d.h.

$E\{\operatorname{Re}\{H_{nk}^{(m)}\}\} \neq 0$ und oder $E\{\operatorname{Im}\{H_{nk}^{(m)}\}\} \neq 0$, kann durch einfache Berechnungen gezeigt werden, dass $\mathbb{E}\{\Delta_{1,n}\}$, $\mathbb{E}\{\Delta_{2,n}\} \equiv 0$, $\forall n$ weiterhin zugrifft, und zwar unabhängig von den Fading-Verteilungen, so dass kein systematischer Fehler auftritt.

Die obigen Ergebnisse zeigen an, dass für unabhängig und identisch verteilte (i.i.d.) Fading-Koeffizienten, die über die Zeit für eine gewisse vorgegebene Kanalrealisierung konstant sind, die Kanalzustandsinformation an den Sensorknoten nicht unbedingt notwendig ist, und dass Fading-Effekte an der Empfangsseite durch eine gewisse statistische Kenntnis zweiter Ordnung korrigiert werden können, Darüber hinaus beeinflusst die Anzahl $n_R$ der Empfangsantennenelemente die Konvergenzrate in dem Gesetz der großen Zahlen aufgrund der Tatsache, dass die Mittelung $J = n_R K$ Summanden umfasst. Folglich erzeugt bereits $n_R = 2$ eine merkliche Leistungsfahigkeitssteierung (vgl. Beispiel 2).

**Bemerkung 3** Es wird darauf hingewiesen, dass Proposition 2 einen Hinweis für eine adequate Schätzung von $\sigma_H^2 + |\mu_H|^2$ gibt, was für en Empfangsknoten erforderlich ist, wie z.B. während Netzwerkinitialisierungen bzw. Kanalschätzungsphasen. Beispielsweise senden während einer solchen Netzwerkinitialisierungsphase alle Sendeknoten $\varphi(R_k) = 1$ für eine genügend hohe Anzahl $M$, so dass der Empfangsknoten unmittelbar eine ausreichende Schätzung des absoluten zweiten Momentes erhält.

In der unmittelbar vorausgehenden Erörterung waren die Fading-Koeffizienten für ein Frame von $M$ Symbolen konstant, so dass der erste Term in Gleichung (6) auf eine Doppelsumme über Antennen $n$ und Sensoren $k$ beschränkt war. Nun soll im Folgenden ein anderes Extrem betrachtet werden, bei dem das Fading nicht nur über die Sensoren und Antennen hinweg unabhängig und identisch verteilt (i.i.d.) ist, sondern auch unabhängig und identisch über die Zeit verteilt ist, wie es in einer Fast-Fading-Situation bzw. einer Situation mit schnellem Schwund der Fall ist. Im Vergleich zu dem Block-Fading-Szenario besitzt die erste Dreifachsumme in Gleichung (6) für diesen Fall $J = n_R KM$ unabhängig und identisch verteilte Summanden. Folglich kann Proposition 2 abermals angewendet werden, wobei aber die Konvergenzrate um einen Faktor $M$ erhöht ist, so dass in dem Zusammenhang der Funktionsberechnung eine Fast-Fading-Situation sogar vorteilhaft ist.

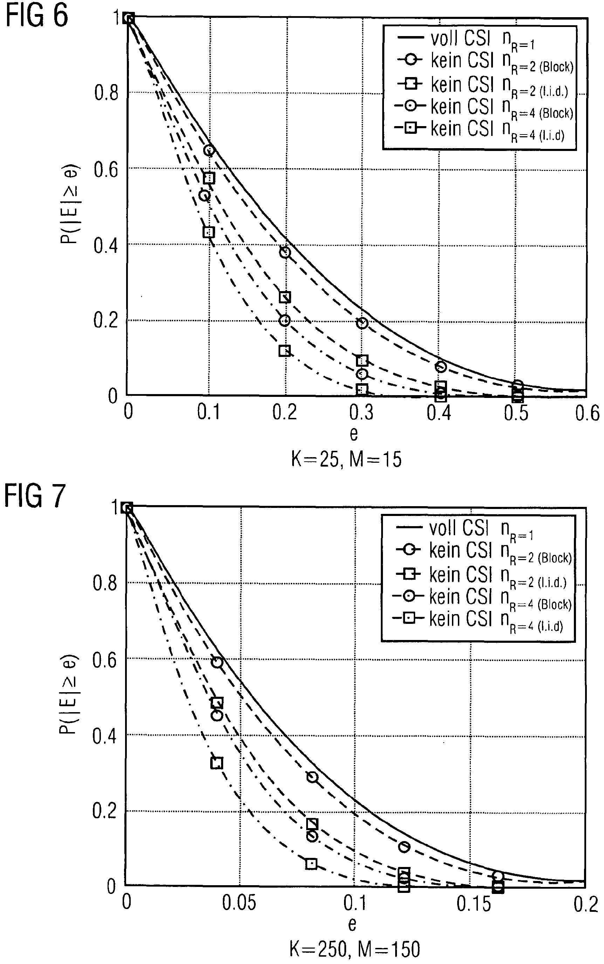

**Beispiel 2** (Numerisches Beispiel) Betrachtet werde beispielsweise der weitverbreitete Spezialfall eines unkorrelierten Rician-Fadings: $H_{nk}^{(m)} \sim \mathcal{N}_C(.5,.75)$ $\forall n,k,m$. Das Netzwerkbeispiel bestehe aus $K = 25$ Knoten mit einer Sequenzlänge von $M = 15$. Die Sensorablesewerte seien unabhängig und identisch gleichverteilt in $\mathcal{X} = [2,14]$, die gewünschte Funktion sei der "arithmetische Mittelwert", es gelte $\sigma_N^2 = 1$ und das Leistungsfähigkeitsmaß sei $\mathbb{P}(|E| \geq \varepsilon)$, mit $\varepsilon \geq 0$, d.h. die Wahrscheinlichkeit, dass der relative Schätzungsfehler $|E| := (\hat{f} - f)/f$ größer oder gleich zu $\varepsilon$ ist. Ein Vergleich des Block-Fadings und des i.i.d.-Falles für $n_R = 2,4$ mit Monte-Carlo-Simlationen sind in Fig. 6 gezeigt.

Abbildungen 6 und 7 verdeutlichen das große Potenzial der Idee von kein-CSI anhand von Simulationsergebnissen. Als Performanzmaß für die Vergleiche wurde die Wahrscheinlichkeit $\mathbb{P}(|E| \geq \varepsilon)$, dass der Betrag des relativen Funktionsschätzfehlers, also $|E| = \left|\dfrac{\hat{f} - f}{f}\right|$, größer oder gleich einem $\varepsilon > 0$ ist, gewählt. Es wurde ein Rice-Fading-Szenario angenommen, indem $\sigma_H^2 + |\mu_H|^2 = 1$ erfüllt ist. Die Kurven für zwei unterschiedlich große Sensornetze ($K = 250$ Knoten und $K = 25$ Knoten) zeigen, dass bereits durch Hinzunahme von nur einer einzigen Antenne am Empfangsknoten ($n_R$ = 2) die Schätzqualität bereits besser ist, als wäre an jedem Knoten der Kanal vollständig und perfekt bekannt.

Fig. 6 und 7 zeigen somit einen Vergleich zwischen dem Fall des Vorliegens einer perfekten Kanalinformation an dem Sensorknoten in dem Fall der Verwendung einer Empfangsantenne (Voll-CSI) mit dem Fall keiner Kanalinformation an den Sensorknoten mit $n_R$=2,4 Empfangsantennen, und zwar in einem unkorrelierten Rice-Block-Fading- und Rice-i.i.d.-Fading-Szenario.

Die Annahme, dass die Fading-Koeffizienten statistisch unabhängig identisch verteilt sind, kann abgeschwächt werden. Sind nämlich die Koeffizienten zwar statistisch unabhängig, aber nicht identisch verteilt mit den Mittelwerten $\mu_{nk}$ und den Varianzen $\sigma_{nk}^2$, so ist es, wenn $n_R$, $K$ hinreichend groß sind, ausreichend, den Einfluss der Kanäle durch Division mit $\sum_{n=1}^{n_R} \sum_{m=1}^{M} \sum_{k=1}^{K} \left( \left( \sigma_{nk}^{(m)} \right)^2 + \left| \mu_{nk}^{(m)} \right|^2 \right)$ am Empfänger zu korrigieren, was, wie oben beschrieben wird, in dem Modul 82 in Fig. 5 durchgeführt wird.

Abschließend stellt sich noch die Frage, wie $\sigma_H^2 + |\mu_H|^2$ oder $\sum_{n=1}^{n_R} \sum_{m=1}^{M} \sum_{k=1}^{K} \left( \left( \sigma_{nk}^{(m)} \right)^2 + \left| \mu_{nk}^{(m)} \right|^2 \right)$ dem Empfangsknoten zur Verfügung gestellt werden können? Da davon ausgegangen werden darf, dass sich diese Langzeitstatistiken des Kanals nur sehr langsam mit der Zeit ändern, senden die Sensorknoten beispielsweise in bestimmten Zeitabständen - zu den oben erwähnten Kanalschätzungsphasen - eine Sequenz der Länge $c \cdot M$, mit $c > 1$ ganzzahlig und hinreichend groß, und der Sendeleistung $\alpha \varphi_k(R_k) \equiv 1$. Der Empfangsknoten empfängt dann unmittelbar eine Schätzung der gewünschten statistischen Momente.

An dieser Stelle sei ausdrücklich darauf hingewiesen, dass die beschriebenen Ausführungsbeispiele nicht auf unabhängige Fading-Umgebungen beschränkt sind. In gewissem Maße dürfen die einzelnen Kanalkoeffizienten untereinander auch korreliert sein, was die Anwendbarkeit der Verfahren nicht beeinträchtigt.

Die im Vorhergehenden beschriebenen Ausführungsbeispiele kommen, so sei betont, ohne eine spezielle Protokollstruktur aus, wie sie in den in der Beschreibungseinleitung beschriebenen Lösungen unbedingt notwendig ist. Zumindest ist die Protokollstruktur deutlich einfacher, falls eine solche verwendet werden muss. Die obigen Ausführungsbeispiele bieten somit ein hohes Maß an Energieeffizienz, zeichnen sich durch eine sehr geringe Komplexität aus, kommen ohne nennenswerten Synchronisierungsaufwand aus, benötigen keine Analog/Digital-Wandlung der Messdaten, sind sehr robust und sind in der Praxis sehr leicht zu implementieren. Der aber entscheidenste Vorteil der vorhergend beschriebenen Ausführungsbeispiele besteht in dem stark reduzierten Aufwand für eine Kanalschätzung an den einzelnen Sensorknoten. Besitzt die Anwendungsumgebung im Sinne der Funkverbindungen sogar bestimmte Eigenschaften, so nutzten dies einige der oben beschriebenen Ausführungsbeispiele aus, um sendeseitig oder sogar insgesamt vollständig ohne Kanalschätzung auszukommen, was in Sensornetzwerken zu einer immensen Ressourceneinsparung führt, da konkurrierende Verfahren ohne entsprechende Kanalschätzung nicht oder nur sehr eingeschränkt einsatzfähig wären.

Die obigen Ausführungsbeispiele können somit in einer überaus großen Anzahl unterschiedlichen drahtlosen Sensornetzwerkapplikationen eingesetzt werden, in denen eine Rekonstruktion der Messwertinformation einzelner Knoten nicht von primärem Interesse ist und der Empfangsknoten stattdessen an einer gewünschten Funktion der Sensordaten interessiert ist. Außerdem ist ein Einsatz der im Vorhergehenden beschriebenen Ausführungsbeispiele als Baustein in geclusterten Netzwerken geeignet, um Messwertinformationen an einem Clusterhead zu komprimieren, womit die Menge zu übertragender Information im gesamten Netzwerk dramatisch reduziert werden kann. Weiterhin ist ein Einsatz für die "physikalische Netzcodierung" denkbar, da diese den Spezialfall linearer Funktionen darstellt.

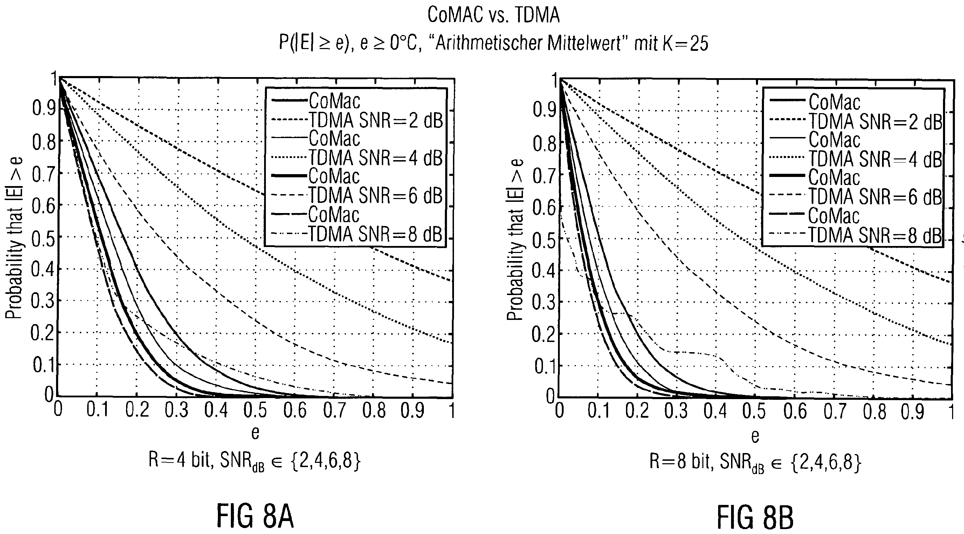

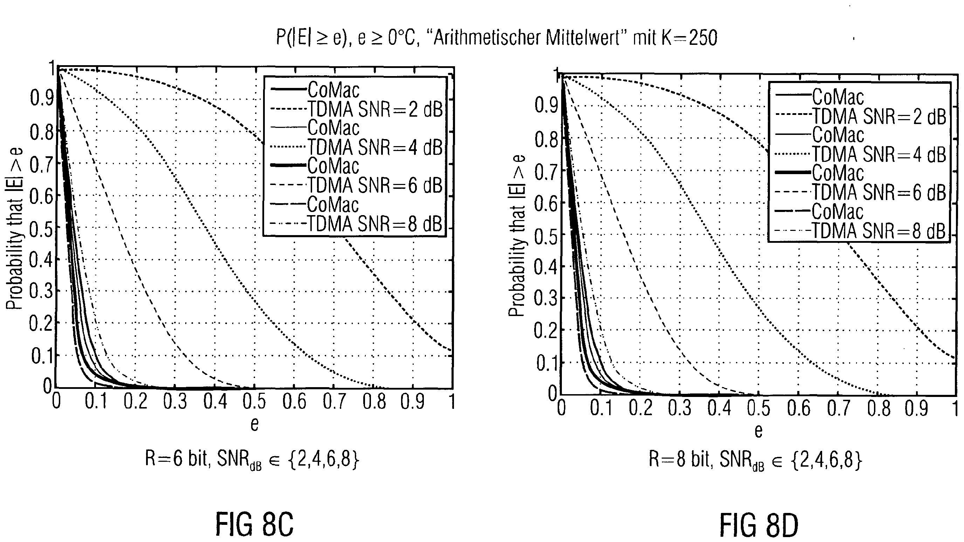

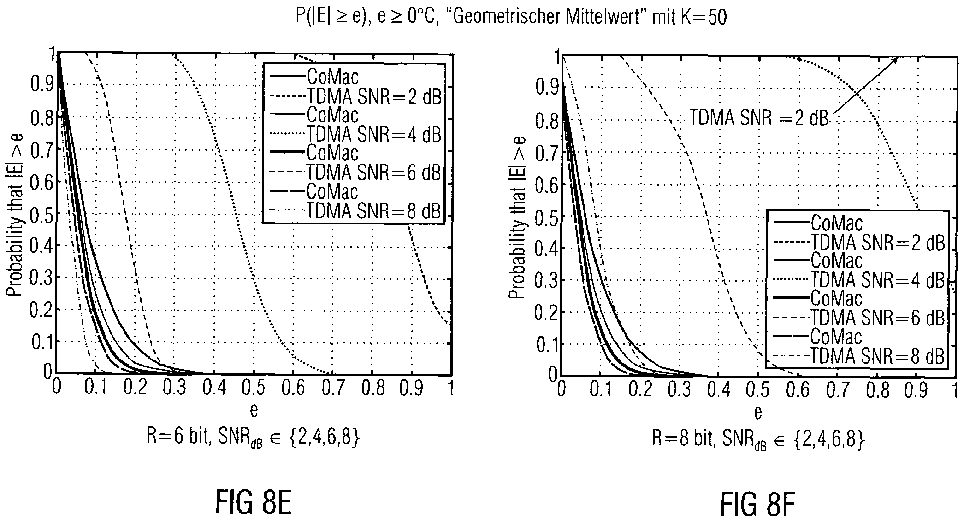

In den Fig. 8a bis 8f wird ein Vergleich von Modulus-CSI, hier auch als CoMAC bezeichnet, mit einem primitiven Sensornetzwerk gezeigt, bei denen die Sensorwerte mittels uncodiertem TDMA übertragen wurden. Dabei lag eine gleichmäßige Quantisierung des "physikalischen Messbereiches", nämlich [-55,125]°C mit $R \in \{4,6,8\}$ Bit vor. Die Messwerte $X_k$ waren gleichverteilt in dem Intervall [2,14]°C$\forall k$. Die Sequenzlänge $M$ betrug $K$ x $R$. Anders ausgedrückt, wurde eine gleiche Übertragungszeit für beide Funktionsnetzwerkschemata gewählt, d.h. Modulus-CSI und getrennte Variablenwertübertragung mit TDMA und Funktionsberechnung. Als eine adäquate SNR-Formulierung wurde folgende verwendet, wobei dabei alle Übertragungsenergiekosten für beide Schemata berücksichtigt wurden:

$$\overline{SNR}_{TDMA} := \alpha \mathbf{Erwartungswert}\{\varphi_k(R_k)\} \frac{2M}{R \cdot \sigma_N^2} \Rightarrow \overline{SNR}_{dB} = 10 \log_{10}\left(\overline{SNR}_{TDMA}\right)$$

$$|E| := \left|\frac{\hat{f} - f}{f}\right|.$$

Als Performanzmaß wurde dabei der Absolutwert des relativen Fehlers verwendet, d.h.

Zusammenfassend kann also zu den Ausführungsbeispielen ausgeführt werden, dass es möglich ist, durch diese Ausführungsbeispiele, Kanalüberlagerungen in einem Drahtlos-MAC dazu zu verwenden, gewünschte Funktionen zu berechnen, wobei Vorverarbeitungs- und Nachverarbeitungsfunktionen die natürliche mathematische Charakteristik des Drahtlos-MAC erweitern können, so dass neben "Addition" auch die arithmetische Operation "Multiplikation" und weitere möglich sind. Ein symbol-weiser Lösungsansatz, der eine symbolgenaue Synchronisation benötigte, ist bei den vorhergehend beschriebenen Ausführungsbeispielen nicht notwendig. Die Ausführungsbeispiele codierten die gemessenen Informationen als Übertragungsleistungen von Zufallsphasensequenzen, so dass eine präzise Synchronisation nicht notwendig war. Auch der Protokollaufwand ist gering. Insgesamt ergibt sich auch eine dramatische Reduktion in dem Kanalschätzaufwand.

Wieder zurückkehrend auf die Fig. 4a-c und 5a-c zeigten obige Ausführungen also, dass die Blöcke 44, 46, 48 und 50 den jeweils zu übertragenden Funktionsvariablenwert am Eingang 42 unter Anpassung des Definitionsbereiches an denjenigen Definitionsbereich, der notwendig ist, um die Codierung als Sendeleistung vornehmen zu können, und unter Anpassung bzw. Sicherstellung der Einhaltung der Sendeleistungsgrenze auf einen Amplitudenwert abbildeten, der dann als Amplitude für die jeweilige Symbolsequenz verwendet wird, die auf diese Weise amplitudenmoduliert gleichzeitig zu den anderen Funktionssendern auf den Mehrfachzugriffskanal 31 gegeben wird. In dem Fall von Fig. 4a-c wird noch eine Vorverzerrung mit dem Inversen des Betrages des komplexen Kanaleinflusses an dem Amplitudeneinstellungswert vorgenommen. An jeder Empfangsantenne ergibt sich eine Summenüberlagerung der Symbolfolgen, deren über die Länge der Funktionsfolgen aufintegriertes Betragsquadrat einen Erwartungswert besitzt, der nach dem Ausführungsbeispiel von Fig. 4a-c lediglich noch um das jeweilige Empfängerrauschen subtraktiv in dem Modul 66 korrigiert werden muss. Gemäß dem Ausführungsbeispiel von Fig. 5a-c wird zuvor noch durch Division der Empfängerleistung durch die Summe aus den Quadraten von Mittelwert und Varianz des Kanaleinflusses bzw. die Summe der zweiten Momente der einzelnen Kanaleinflüsse für die einzelnen Wegstrecken zwischen den Empfangsantennen auf der einen und den Sendern auf der anderen Seite, wie sie sich durch Schätzung aus dem Empfang einer Überlagerung von Konstantleistungssignalen an der jeweiligen Empfangsantenne und insbesondere aus einer Auswertung der aufsummierten Empfangsleistungen an den einzelnen Empfangsantennen ergibt, die von den Funktionssendern ausgesendet werden, eine Kanalentzerrung durchgeführt. Die Module 72, 70 und 68 sorgen lediglich für die Rücktransformation des Empfangsleistungswertes in die Funktionsvariablen-Definitionsbereichsdomäne. Es wird insbesondere darauf hingewiesen, dass die gesamten Komponenten zwischen Eingang 42 und Ausgang 54 bzw. Eingang $34_1$ und Ausgang 62 analog ausgeführt sein können, d.h. in analoger Schaltungstechnik.

Es wird darauf hingewiesen, dass in den obigen Ausführungsbeispielen die jeweilige Systembeschreibung in beispielsweise Fig. 4a-5c im komplexen Basisband erfolgte, weshalb Komponenten von Funktionsempfänger und Funktionsvariablensender, die den Übergang von der Trägersignaldomäne in das komplexe Basisband bewerkstelligen, wie z.B. Demodulatoren, Modulatoren, Mischer usw., nicht explizit aufgeführt sind, aber natürlich sehr wohl Bestandteil des jeweiligen Systems, wie z.B. am Senderausgang bzw. Empfängereingang, sind, und weshalb insbesondere die auftretenden Kanal-, Rausch- und Empfangsgrößen, die bei obiger Beschreibung verwendet wurden, komplexwertig sind. Beispielsweise befände sich am Ausgang des jeweiligen Funktionsvariablensenders zwischen Antenne $36_\#$ und Symbolerzeuger 54 ein Modulator, um Realteil und Imaginärteil der komplexen Symbole auf jeweils 90° zueinander versetzte Schwingungssignale gleicher Trägerfrequenz aufzumodulieren und anschließend letztere zu mischen, um das modulierte Trägersignal zu erhalten, und am Eingang des Funktionsempfängers zwischen Antenne $34_\#$ und Leistungsbestimmer 64 kann sich ein entsprechender Demodulator befinden, wie z.B. ein I/Q-Demodulator.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Funktionsempfänger zur Ermittlung eines Funktionsergebnisses aus einer Mehrzahl von Funktionsvariablenwerten von einer Mehrzahl von Funktionsvariablenwert-Sendern ($30_{1...K}$), mit
einem Empfänger ($34_l$) zum Empfangen

eines ersten Mehrfachzugriffkanal-Signals, das einer, bedingt durch eine Summeneigenschaft eines drahtlosen Mehrfachzugriffskanals, Summation von Konstantleistungssignalen von der Mehrzahl von Funktionsvariablenwert-Sendern an dem Empfänger entspricht, in einer Kanalschätzungsphase, und
eines zweiten Mehrfachzugriffkanal-Signals, das einer, bedingt durch eine Summeneigenschaft eines drahtlosen Mehrfachzugriffskanals, Summation einer Mehrzahl von Folgen von Symbolen von der Mehrzahl von Funktionsvariablenwert-Sendern mit für die Mehrzahl von Funktionsvariablenwert-Sendern unterschiedlich und zufällig, pseudo-zufällig oder deterministisch mit einer Gleichverteilung variierender Phase und einem Betrag, der für die Funktionsvariablenwert-Sender jeweils für die Symbole gleich ist und von dem jeweiligen Funktionsvariablenwert des jeweiligen Funktionsvariablenwert-Senders abhängt, über den Mehrfachzugriffkanal (31) an dem Empfänger entspricht, in einer Normalbetriebsphase;

einem Kanalschätzer (90) zum Erfassen einer Empfangsleistung des ersten Mehrfachzugriffkanal-Signals in einer Zeit, über die hinweg sich die Konstantleistungssignale überlappen, um ein statistisches Moment zweiter Ordnung zu erhalten, die den Mehrfachzugriffkanal beschreibt; und
einem Funktionsergebnisbestimmer (58) zum Bestimmen des Funktionsergebnisses auf Basis einer Empfangsleistung des zweiten Mehrfachzugriffkanal-Signals und des statistischen Moments zweiter Ordnung.

2. Funktionsempfänger gemäß Anspruch 1, wobei der Empfänger des Funktionsempfängers mehrere Antennen ($34_{1...n_R}$) aufweist, und der Kanalschätzer (90) ausgebildet ist, um eine Summe von Empfangsleistungen des ersten Mehrfachzugriffkanal-Signals an den mehreren Anstennen zu erfassen, um das statistische Moment zweiter Ordnung zu erhalten.

3. Funktionsempfänger gemäß Anspruch 1 oder 2, wobei der Empfänger des Funktionsempfängers mehrere Antennen ($34_{1...n_R}$) aufweist und der Funktionsergebnisbestimmer ausgebildet ist, um das Funktionsergebnis auf Basis einer Summe der Empfangsleistungen des zweiten Mehrfachzugriffkanals an den mehreren Antennen zu erhalten.

4. Funktionsempfänger gemäß einem der Ansprüche 1 bis 3, wobei der Funktionsergebnisbestimmer (58) ausgebildet ist, um die Empfangsleistung des zweiten Mehrfachzugriffkanal-Signals mit dem absoluten zweiten Moment des Kanaleinflusses des Mehrfachzugriffkanals mittels einer Division zu korrigieren.

5. Mehrzahl von Funktionsvariablenwert-Sendern, wobei jeder Funktionsvariablenwert-Sender zum Senden eines Funktionsvariablenwertes zusammen mit weiteren Funktionsvariablenwerten der anderen Funktionsvariablenwert-Sendern der Mehrzahl von Funktionsvariablenwert-Sendern über einen drahtlosen Mehrfachzugriffkanal (31) an einen Funktionsempfänger (32) ausgebildet ist, wobei jeder Funktionsvariablenwert-Sender konfiguriert ist, um
in einer Kanalschätzungsphase zeitlich überlappend ein Konstantleistungssignal zu senden, so dass sich bedingt durch eine Summeneigenschaft des drahtlosen Mehrfachzugriffskanals eine Summation der Konstantleistungssignale an einem Empfänger des Funktionsempfänger (32) ergibt, und
in einer Normalbetriebsphase eine Folge von Symbolen mit zufällig zeitlich variierender, pseudo-zufällig zeitlich variierender oder deterministisch mit einer Gleichverteilung zeitlich variierender Phase und einem Betrag, der für die Symbole eines jeweiligen Funktionsvariablenwert-Senders gleich ist und von dem jeweiligen Funktionsvariablenwert abhängt, zu senden, und zwar ohne kanalabhängige Vorverzerrung, und so, dass eine Sendeleistung der Folge von Symbolen von dem jeweiligen Funktionsvariablenwert abhängt, und zeitlich überlappend, so dass sich bedingt durch eine Summeneigenschaft des drahtlosen Mehrfachzugriffskanals eine Summation der Folgen von Symbolen an dem Empfänger des Funktionsempfänger (32) ergibt.

6. Mehrzahl von Funktionsvariablenwert-Sendern, wobei jeder Funktionsvariablenwert-Sender zum Senden eines Funktionsvariablenwertes zusammen mit weiteren Funktionsvariablenwerten der anderen Funktionsvariablenwert-Sendern der Mehrzahl von Funktionsvariablenwert-Sendern über einen drahtlosen Mehrfachzugriffkanal (31) an einen Funktionsempfänger (32) ausgebildet ist und folgende Merkmale aufweist:

einen Kanalschätzer (38) zum Schätzen eines Betrags eines Kanaleinflusses zwischen dem Funktionsvariablenwert-Sender und dem Funktionsempfänger (32) aus einem von dem Funktionsempfänger (32) gesendeten Pilotsignal; und
einem Sender (40) zum Senden einer Folge von Symbolen mit zufällig zeitlich variierender, pseudo-zufällig zeitlich variierender oder deterministisch mit einer Gleichverteilung zeitlich variierender Phase und einem Betrag, der für die Symbole eines jeweiligen Funktionsvariablenwert-Senders gleich ist und von dem jeweiligen Funktionsvariablenwert abhängt, und zwar unter Vorverzerrung der Symbole abhängig von einem Inversen des Betrags des Kanaleinflusses, aber unabhängig von einer Phase des Kanaleinflusses, und so, dass eine Sendeleistung der Folge von Symbolen von dem Funktionsvariablenwert abhängt, und zwar zeitlich überlappend, so dass sich bedingt durch eine Summeneigenschaft des drahtlosen Mehrfachzugriffskanals eine Summation der Folgen von Symbolen von den Sendern der Mehrzahl von Funktionsvariablenwert-Sendern an einem Empfänger des Funktionsempfänger (32) ergibt.

7. Mehrzahl von Funktionsvariablenwert-Sendern gemäß Anspruch 5 oder 6, wobei jeder Funktionsvariablenwert-Sender ausgebildet ist, einen physikalischen Messwert zu erfassen und als den jeweiligen Funktionsvariablenwert bereitzustellen.

8. System mit
einer Mehrzahl von Funktionsvariablenwert-Sendern ($30_{1...K}$) gemäß Anspruch 5; und
einem Funktionsempfänger (32) zur Ermittlung eines Funktionsergebnisses aus der Mehrzahl von Funktionsvariablenwerten von der Mehrzahl von Funktionsvariablenwert-Sendern ($30_{1...K}$), wobei der Funktionsempfänger (32) folgende Merkmale aufweist:

einen Empfänger ($34_1$) zum Empfangen eines ersten Mehrfachzugriffkanal-Signals, das einer Überlagerung der Konstantleistungssignale von der Mehrzahl von Funktionsvariablenwert-Sendern über den Mehrfachzugriffkanal an dem Empfänger entspricht, und eines zweiten Mehrfachzugriffkanal-Signals, das einer Überlagerung der Mehrzahl von Folgen von Symbolen von der Mehrzahl von Funktionsvariablenwert-Sendern entspricht; einem Kanalschätzer (90) zum Erfassen einer Empfangsleistung des ersten Mehrfachzugriffkanal-Signals in einer Zeit, über die hinweg sich die Konstantleistungssignale überlappen, um ein statistisches Moment zweiter Ordnung zu erhalten, das den Mehrfachzugriffkanal (31) beschreibt; und einem Funktionsergebnisbestimmer (58) zum Bestimmen des Funktionsergebnisses auf der Basis einer Empfangsleistung des zweiten Mehrfachzugriffkanal-Signals und des statistischen Moments zweiter Ordnung.

9. System gemäß Anspruch 8, wobei die Funktionsvariablenwert-Sender ausgebildet sind, um in der Normalbetriebsphase den jeweiligen Funktionsvariablenwert einer Vorverarbeitung (46) gefolgt von einem Wurzelziehen (50) zu unterziehen, um den Betrag der Symbole der Folge von Symbolen des jeweiligen Funktionsvariablenwert-Senders zu erhalten, und der Funktionsergebnisbestimmer (58) des Funktionsempfängers (32) ausgebildet ist, um die Empfangsleistung des zweiten Mehrfachzugriffkanal-Signals einer Nachverarbeitung (70) zu unterziehen, wobei die Funktionsvariablenwert-Sender und der Funktionsergebnisbestimmer (58) des Funktionsempfängers so ausgebildet sind, dass unabhängig von einer zeitlichen Änderung des Mehrfachzugriffkanals (31) und für alle möglichen Werte, die die Funktionsvariablenwerte annehmen können, das Funktionsergebnis einen geometrischen oder arithmetischen Mittelwert der Funktionsvariablenwerte darstellt.

10. System mit
einer Mehrzahl von Funktionsvariablenwert-Sendern ($30_{1...K}$) gemäß Anspruch 6; und
einem Funktionsempfänger (32) zur Ermittlung eines Funktionsergebnisses aus der Mehrzahl von Funktionsvariablenwerten von der Mehrzahl von Funktionsvariablenwert-Sendern, wobei der Funktionsempfänger folgende Merkmale aufweist:

einen Empfänger ($34_1$) zum Empfangen eines Mehrfachzugriffkanal-Signals, das einer Summation der Mehrzahl von Folgen von Symbolen von der Mehrzahl von Funktionsvariablenwert-Sendern über den Mehrfachzugriffkanal (31) an dem Empfänger entspricht; und
einen Funktionsergebnisbestimmer (58) zum Bestimmen des Funktionsergebnisses auf Basis einer Empfangsleistung des Mehrfachzugriffkanal-Signals; und
einem Pilotsender (56) zum Senden des Pilotsignals.

11. System gemäß Anspruch 10, wobei die Sender (40) der Funktionsvariablenwert-Sender ausgebildet sind, um den jeweiligen Funktionsvariablenwert einer Vorverarbeitung (46) gefolgt von einem Wurzelziehen (50) und einer Multiplikation mit dem Inversen des Betrags des Kanaleinflusses zwischen dem jeweiligen Funktionsvariablenwert-Sender und dem Funktionsempfänger (32) zur Vorverzerrung der Symbole der Folge von Symbolen des jeweiligen Funktionsvariablenwert-Senders zu unterziehen, um den Betrag der Symbole der Folge von Symbolen des jeweiligen Funktionsvariablenwert-Senders zu erhalten, und der Funktionsergebnisbestimmer (58) des Funktionsempfängers (32) ausgebildet ist, um die Empfangsleistung des Mehrfachzugriffkanal-Signals einer Nachverarbeitung (70) zu unterziehen, wobei der Sender (40) der Funktionsvariablenwert-Sender und der Funktionsergebnisbestimmer (58) des Funktionsempfängers so ausgebildet sind, dass unabhängig von einer zeitlichen Änderung des Mehrfachzugriffkanals (31) und für alle möglichen Werte, die die Funktionsvariablenwerte annehmen können, das Funktionsergebnis einen geometrischen oder arithmetischen Mittelwert der Funktionsvariablenwerte darstellt.

12. Verfahren zur Ermittlung eines Funktionsergebnisses aus einer Mehrzahl von Funktionsvariablenwerten von einer Mehrzahl von Funktionsvariablenwert-Sendern ($30_{1...K}$) an einem Empfänger, mit
Empfangen eines ersten Mehrfachzugriffkanal-Signals, das einer, bedingt durch eine Summeneigenschaft eines drahtlosen Mehrfachzugriffskanals, Summation von Konstantleistungssignalen von der Mehrzahl von Funktionsvariablenwert-Sendern über einen Mehrfachzugriffskanal (31) an dem Empfänger entspricht, in einer Kanalschätzungsphase, und
Empfangen eines zweiten Mehrfachzugriffkanal-Signals, das einer, bedingt durch eine Summeneigenschaft eines drahtlosen Mehrfachzugriffskanals, Summation einer Mehrzahl von Folgen von Symbolen von der Mehrzahl von Funktionsvariablenwert-Sendern mit für die Mehrzahl von Funktionsvariablenwert-Sendern unterschiedlich und zufällig, pseudo-zufällig oder deterministisch mit einer Gleichverteilung variierender Phase und einem Betrag, der für die Funktionsvariablenwert-Sender jeweils für die Symbole gleich ist und von dem jeweiligen Funktionsvariablenwert des jeweiligen Funktionsvariablenwert-Senders abhängt, über den Mehrfachzugriffkanal (31) an dem Empfänger entspricht, in einer Normalbetriebsphase;
Erfassen einer Empfangsleistung des ersten Mehrfachzugriffkanal-Signals in einer Zeit, über die hinweg sich die Konstantleistungssignale überlappen, um ein statistisches Moment zweiter Ordnung zu erhalten, die den Mehrfachzugriffkanal beschreibt; und

Bestimmen des Funktionsergebnisses auf Basis einer Empfangsleistung des zweiten Mehrfachzugriffkanal-Signals und des statistischen Moments zweiter Ordnung.

**13.** Verfahren zum Betreiben einer Mehrzahl von Funktionsvariablenwert-Sendern, wobei jeder Funktionsvariablenwert-Senders zum Senden eines Funktionsvariablenwertes zusammen mit weiteren Funktionsvariablenwerten der anderen Funktionsvariablenwert-Sendern der Mehrzahl von Funktionsvariablenwert-Sendern über einen drahtlosen Mehrfachzugriffkanal (31) an einen Funktionsempfänger (32) ausgebildet ist, mit

in einer Kanalschätzungsphase, zeitlich überlappendes Senden eines Konstantleistungssignal von jedem Funktionsvariablenwert-Sender, so dass sich bedingt durch eine Summeneigenschaft des Mehrfachzugriffskanals eine Summation der Konstantleistungssignale an einem Empfänger des Funktionsempfänger (32) ergibt; und

in einer Normalbetriebsphase, Senden, von jedem Funktionsvariablenwert-Sender, einer Folge von Symbolen mit zufällig zeitlich variierender, pseudo-zufällig zeitlich variierender oder deterministisch mit einer Gleichverteilung zeitlich variierender Phase und einem Betrag, der für die Symbole eines jeweiligen Funktionsvariablenwert-Senders gleich ist und von dem jeweiligen Funktionsvariablenwert abhängt, und zwar ohne kanalabhängige Vorverzerrung, und so, dass eine Sendeleistung der Folge von Symbolen von dem Funktionsvariablenwert abhängt, und zeitlich überlappend, so dass sich bedingt durch eine Summeneigenschaft des Mehrfachzugriffskanals eine Summation der Folgen von Symbolen an dem Empfänger des Funktionsempfänger (32) ergibt.

**14.** Verfahren zum Betreiben einer Mehrzahl von Funktionsvariablenwert-Sendern, wobei jeder Funktionsvariablenwert-Senders zum Senden eines Funktionsvariablenwertes zusammen mit weiteren Funktionsvariablenwerten der anderen Funktionsvariablenwert-Sendern der Mehrzahl von Funktionsvariablenwert-Sendern über einen drahtlosen Mehrfachzugriffkanal (31) an einen Funktionsempfänger (32), mit

Schätzen, durch jeden Funktionsvariablenwert-Sender, eines Betrags eines Kanaleinflusses zwischen dem Funktionsvariablenwert-Sender und dem Funktionsempfänger (32) aus einem von dem Funktionsempfänger (32) gesendeten Pilotsignal; und

Senden, von jedem Funktionsvariablenwert-Sender, einer Folge von Symbolen mit zufällig zeitlich variierender, pseudo-zufällig zeitlich variierender oder deterministisch mit einer Gleichverteilung zeitlich variierender Phase und einem Betrag, der für die Symbole eines jeweiligen Funktionsvariablenwert-Senders gleich ist und von dem jeweiligen Funktionsvariablenwert abhängt, und zwar unter Vorverzerrung der Symbole abhängig von einem Inversen des Betrags des Kanaleinflusses, aber unabhängig von einer Phase des Kanaleinflusses, und so, dass eine Sendeleistung der Folge von Symbolen von dem Funktionsvariablenwert abhängt, und zwar zeitlich überlappend, so dass sich bedingt durch eine Summeneigenschaft des Mehrfachzugriffskanals eine Summation der Folgen von Symbolen von den Sendern der Mehrzahl von Funktionsvariablenwert-Sendern an einem Empfänger des Funktionsempfänger (32) ergibt.

**15.** Computerprogramm mit einem Programmcode zur Durchführung des Verfahrens nach Anspruch 13 oder 14, wenn das Programm auf einem Computer abläuft.

**Claims**

**1.** Function receiver for determining a function result of a plurality of function variable values from a plurality of function variable value transmitters $(30_{1...K})$, comprising:

a receiver $(34_1)$ for receiving,

in a channel estimation phase, a first multiple-access channel signal corresponding, due to a sum characteristic of a wireless multiple-access channel, to a summation of constant power signals from the plurality of function variable value transmitters at the receiver, and,

in a normal operating phase, a second multiple-access channel signal corresponding, due to a sum characteristic of a wireless multiple-access channel, to a summation of a plurality of sequences of symbols from the plurality of function variable value transmitters, wherein, for the plurality of function variable value transmitters, a symbols' phase varies differently and randomly, pseudo-randomly or deterministically with uniform distribution, and a symbols' magnitude is the same for the function variable value transmitters and depends on the respective function variable value of the respective function variable value transmitter, over the multiple-access channel (31) at the receiver;

a channel estimator (90) for detecting a receive power of the first multiple-access channel signal during a time in which the constant power signals overlap to acquire a second order statistical moment describing the multiple-access channel; and

a function result determiner (58) for determining the function result based on a receive power of the second multiple-access channel signal and the second order statistical moment.

2. Function receiver according to claim 1, wherein the receiver of the function receiver can comprise several antennas ($34_{1...nR}$), and the channel estimator (90) is implemented to detect a sum of receive powers of the first multiple-access channel signal at the several antennas to obtain the second order statistical moment.

3. Function receiver according to claim 1 or 2, wherein the receiver of the function receiver comprises several antennas ($34_{1...nR}$) and the function result determiner is implemented to obtain the function result based on a sum of the receive powers of the second multiple-access channel at the several antennas.

4. Function receiver according to one of claims 1 to 3, wherein the function result determiner (58) is implemented to correct the receive power of the second multiple-access channel signal with the absolute second moment of the channel influence of the multiple-access channel by means of division.

5. Plurality of function variable value transmitters, wherein each function variable value transmitter is implemented to transmit a function variable value together with further function variable values of the other function variable value transmitters of the plurality of function variable value transmitters over a wireless multiple-access channel (31) to a function receiver (32), wherein each function variable value transmitter is configured to:

transmit, in a channel estimation phase, in a temporally overlapping manner, a constant power signal so that, due to a sum characteristic of the wireless multiple-access channel, a summation of the constant power signals results at a receiver of the function receiver (32), and,

transmit, in a normal operating phase, a sequence of symbols, wherein a symbols' phase varies randomly temporally, pseudo-randomly temporally or deterministically, with uniform distribution, temporally, and a symbols' magnitude is the same for the symbols of a respective function variable transmitter and depends on the respective function variable value, without channel-dependent pre-distortion and such that a transmit power of the sequence of symbols depends on the respective function variable value, and in a temporally overlapping manner so that, due to a sum characteristic of the wireless multiple-access channel, a summation of the sequences of symbols results at the receiver of the function receiver (32).

6. Plurality of function variable value transmitters, wherein each function variable value transmitter is implemented to transmit a function variable value together with further function variable values of the other function variable value transmitters of the plurality of function variable value transmitters over a wireless multiple-access channel (31) to a function receiver (32), and comprises:

a channel estimator (38) for estimating a magnitude of a channel influence between the function variable value transmitter and the function receiver (32) from a pilot signal transmitted by the function receiver (32); and

a transmitter (40) for transmitting a sequence of symbols, wherein a symbol's phase varies randomly temporally, pseudo-randomly temporally or deterministically, with uniform distribution, temporally and a symbol's magnitude is the same for the symbols of a respective function variable value transmitter and depending on the respective function variable value, by pre-distorting the symbols in dependence on an inverse of the magnitude of the channel influence, but independent of a phase of the channel influence, and such that a transmit power of the sequence of symbols depends on the function variable value, in a temporally overlapping manner so that, due to a sum characteristic of the wireless multiple-access channel, a summation of the sequences of symbols from the transmitters of the plurality of function variable value transmitters results at a receiver of the function receiver (32).

7. Plurality of function variable value transmitters according to claim 5 or 6, wherein each function variable value transmitter is implemented to detect a physical measurement value and to provide the same as respective function variable value.

8. System, comprising:

a plurality of function variable value transmitters ($30_{1...K}$) according to claim 5; and

a function receiver (32) for determining a function result of the plurality of function variable values from the plurality of function variable value transmitters ($30_{1...K}$), the function receiver (32) comprising:

a receiver ($34_1$) for receiving a first multiple-access channel signal corresponding to a superposition of constant power signals of the plurality of function variable value transmitters over the multiple-access channel at the receiver, and a second multiple-access channel signal corresponding to a superposition of the plurality of sequences of symbols from the plurality of function variable value transmitters;

a channel estimator (90) for detecting a receive power of the first multiple-access channel signal during a time in which the constant power signals overlap to acquire a second order statistical moment describing the multiple-access channel (31); and

a function result determiner (58) for determining the function result based on a receive power of the second multiple-access channel signal and the second order statistical moment.

9. System according to claim 8, wherein the function variable value transmitters are implemented to subject, in the normal operating phase, the respective function variable value to pre-processing (46) followed by root extraction (50), to acquire the magnitude of the symbols of the sequence of symbols of the respective function variable value transmitter, and the function result determiner (58) of the function receiver (32) is implemented to subject the receive power of the second multiple-access channel signal to post-processing (70), wherein the function variable value transmitters and the function result determiner (58) of the function receiver are implemented such that, independent of a temporal modification of the multiple-access channel (31) and for all possible values that the function variable values can assume, the function result represents a geometric or arithmetic average of the function variable values.

10. System, comprising:

a plurality of function variable value transmitters ($30_{1...K}$) according to claim 6; and
a function receiver (32) for determining a function result of the plurality of function variable values from the plurality of function variable value transmitters, the function receiver comprising:

a receiver ($34_1$) for receiving a multiple-access channel signal corresponding to a summation of the plurality of sequences of symbols from the plurality of function variable value transmitters over the multiple-access channel (31) at the receiver; and
a function result determiner (58) for determining the function result based on a receive power of the multiple-access channel signal; and
a pilot transmitter (562) for transmitting the pilot signal.

11. System according to claim 10, wherein the transmitters (40) of the function variable value transmitters are implemented to subject the respective function variable value to pre-processing (46) followed by root extraction (50) and a multiplication with the inverse of the magnitude of the channel influence between the respective function variable value transmitter and the function receiver (32) for pre-distorting the symbols of the sequence of symbols of the respective function variable value transmitter, to acquire the magnitude of the symbols of the sequence of symbols of the respective function variable value transmitter, and the function result determiner (58) of the function receiver (32) is implemented to subject the receive power of the multiple-access channel signal to post-processing (70), wherein the transmitter (40) of the function variable value transmitters and the function result determiner (58) of the function receiver are implemented such that, independent of a temporal modification of the multiple-access channel (31) and for all possible values that the function variable values can assume, the function result represents a geometric or arithmetic average of the function variable values.

12. Method for determining a function result of a plurality of function variable values from a plurality of function variable value transmitters ($30_{1...K}$) at a receiver, comprising:

receiving, in a channel estimation phase, a first multiple-access channel signal corresponding, due to a sum characteristic of a wireless multiple-access channel, to a summation of constant power signals from the plurality of function variable value transmitters over a multiple-access channel (31) at the receiver, and,
receiving, in a normal operating phase, a second multiple-access channel signal corresponding, due to a sum characteristic of a wireless multiple-access channel, to a summation of a plurality of sequences of symbols from the plurality of function variable value transmitters wherein, for the plurality of function variable value transmitters, a symbols' phase varies differently and randomly, pseudo-randomly or deterministically with uniform distribution, and a symbols' magnitude is the same for the function variable value transmitters and depends on the respective function variable value of the respective function variable value transmitter, over the multiple-access channel (31) at the receiver;

detecting a receive power of the first multiple-access channel signal during a time in which the constant power signals overlap to acquire a second order statistical moment describing the multiple-access channel; and determining the function result based on a receive power of the second multiple-access channel signal and the second order statistical moment.

13. Method for operating a plurality of function variable value transmitters, wherein each function variable value transmitter is implemented to transmit a function variable value together with further function variable values of the other function variable value transmitters of the plurality of function variable value transmitters over a wireless multiple-access channel (31) to a function receiver (32), comprising:

in a channel estimation phase, transmitting a constant power signal in a temporally overlapping manner from each function variable value transmitter so that, due to a sum characteristic of the multiple-access channel, a summation of the constant power signals results at a receiver of the function receiver (32); and

in a normal operating phase, transmitting from each function variable value transmitter a sequence of symbols wherein a symbols' phase varies randomly temporally, pseudo-randomly temporally or deterministically temporally with uniform distribution, and a symbols' magnitude is the same for the symbols of a respective function variable value transmitter and depends on the respective function variable value, without channel-dependent pre-distortion, and such that a transmit power of the sequence of symbols depends on the function variable value, and in a temporally overlapping manner so that, due to a sum characteristic of the multiple-access channel, a summation of the sequences of symbols results at the receiver of the function receiver (32).

14. Method for operating a plurality of function variable value transmitters, wherein each function variable value transmitter is for transmitting a function variable value together with further function variable values of the other function variable value transmitters of the plurality of function variable value transmitters over a wireless multiple-access channel (31) to a function receiver (32), comprising:

estimating, by each function variable value transmitter, a magnitude of a channel influence between the function variable value transmitter and the function receiver (32) from a pilot signal transmitted by the function receiver (32); and

transmitting, from each function variable value transmitter, a sequence of symbols, wherein a symbols' phase varies randomly temporally, pseudo-randomly temporally or deterministically temporally with uniform distribution, and a symbols' magnitude is the same for the symbols of a respective function variable value transmitter and depends on the respective function variable value, by pre-distorting the symbols in dependence on an inverse of the magnitude of the channel influence, but independent of a phase of the channel influence, and such that a transmit power of the sequence of symbols depends on the function variable value, and in a temporally overlapping manner so that, due to a sum characteristic of the multiple-access channel, a summation of the sequences of symbols from the transmitters of the plurality of function variable value transmitters results at a receiver of the function receiver (32).

15. Computer program having a program code for performing the method according to claims 13 or 14, when the program runs on a computer.

## Revendications

1. Récepteur de fonctions pour déterminer un résultat de fonctions parmi une pluralité de valeurs de variables de fonctions d'une pluralité d'émetteurs de valeurs de variables de fonctions ($30_{1...K}$), avec un récepteur ($34_1$) destiné à recevoir

un premier signal de canal à accès multiples qui correspond, en raison d'une propriété de somme d'un canal à accès multiples sans fil, à la totalisation de signaux de puissance constante de la pluralité d'émetteurs de valeurs de variables de fonctions au récepteur, dans une phase d'estimation de canal, et

un deuxième signal de canal à accès multiples qui correspond, en raison d'une propriété de somme d'un canal à accès multiples sans fil, à la totalisation d'une pluralité de séquences de symboles de la pluralité d'émetteurs de valeurs de variables de fonctions à phase variable de manière différente et aléatoire, variable de manière pseudo-aléatoire ou variable de manière déterministe avec une distribution uniforme et une quantité qui, pour chacun des émetteurs de valeurs de variables de fonctions, est identique pour les symboles et dépend de la valeur de variables de fonctions respective de l'émetteur de valeurs de variables de fonctions respectif, via le canal à accès multiples (31) au récepteur, dans une phase de fonctionnement normal;

un estimateur de canal (90) destiné à détecter une puissance de réception du premier signal de canal à accès multiples dans un laps de temps pendant lequel les signaux à puissance constante se chevauchent pour obtenir un moment statistique de deuxième ordre qui décrit le canal à accès multiples; et
un déterminateur de résultat de fonctions (58) destiné à déterminer le résultat de fonctions sur base d'une puissance de réception du deuxième signal de canal à accès multiples et du moment statistique de deuxième ordre.

2. Récepteur de fonctions selon la revendication 1, dans lequel le récepteur du récepteur de fonctions présente plusieurs antennes ($34_{1...nR}$), et l'estimateur de canal (90) est conçu pour détecter une somme des puissances de réception du premier signal de canal à accès multiples aux plusieurs antennes pour obtenir le moment statistique de deuxième ordre.

3. Récepteur de fonctions selon la revendication 1 ou 2, dans lequel le récepteur du récepteur de fonctions présente plusieurs antennes ($34_{1...nR}$), et le déterminateur de résultat de fonctions est conçu pour obtenir le résultat de fonctions sur base d'une somme des puissances de réception du deuxième canal à accès multiples aux plusieurs antennes.

4. Récepteur de fonctions selon l'une des revendications 1 à 3, dans lequel le déterminateur de résultat de fonctions (58) est conçu pour corriger la puissance de réception du deuxième signal de canal à accès multiples au deuxième moment absolu de l'influence de canal du canal à accès multiples au moyen d'une division.

5. Pluralité d'émetteurs de valeurs de variables de fonctions, dans laquelle chaque émetteur de valeurs de variables de fonctions est conçu pour transmettre une valeur de variables de fonctions ensemble avec d'autres valeurs de variables de fonctions des autres émetteurs de valeurs de variables de fonctions de la pluralité d'émetteurs de valeurs de variables de fonctions via un canal à accès multiples sans fil (31) à un récepteur de fonctions (32), dans laquelle chaque émetteur de valeurs de variables de fonctions est conçu pour
transmettre, dans une phase d'estimation de canal, en chevauchement dans le temps, un signal de puissance constante, de sorte que soit obtenue, en raison d'une propriété de somme du canal à accès multiples sans fil, une totalisation des signaux de puissance constante à un récepteur du récepteur de fonctions (32), et
transmettre, dans une phase de fonctionnement normal, une séquence de symboles à phase variable variant de manière aléatoire dans le temps, variant de manière pseudo-aléatoire dans le temps ou de manière déterministe dans le temps avec une de distribution uniforme et une quantité qui est identique pour les symboles d'un émetteur de valeurs de variables de fonctions respectif et qui dépend de la valeur de variables de fonctions respective, et ce sans pré-distorsion en fonction du canal et de sorte qu'une puissance de transmission de la séquence de symboles dépende de la valeur de variables de fonctions respective, et de manière chevauchante dans le temps, de sorte que soit obtenue, en raison d'une propriété de somme du canal à accès multiples sans fil, une totalisation des séquences de symboles au récepteur du récepteur de fonctions (32).

6. Pluralité d'émetteurs de valeurs de variables de fonctions, dans laquelle chaque émetteur de valeurs de variables de fonctions est conçu pour transmettre une valeur de variables de fonctions ensemble avec d'autres valeurs de variables de fonctions des autres émetteurs de valeurs de variables de fonctions de la pluralité d'émetteurs de valeurs de variables de fonctions via un canal à accès multiples sans fil (31) à un récepteur de fonctions (32) et présente les caractéristiques suivantes:

un estimateur de canal (38) destiné à estimer une quantité d'une influence de canal entre l'émetteur de valeurs de variables de fonctions et le récepteur de fonctions (32) d'un signal pilote transmis par le récepteur de fonctions (32); et
un émetteur (40) destiné à transmettre une séquence de symboles à phase variable de manière aléatoire dans le temps, variable de manière pseudo-aléatoire dans le temps ou de manière déterministe dans le temps avec une distribution uniforme et une quantité qui est identique pour les symboles d'un émetteur de valeurs de variables de fonction respectif et qui dépend de la valeur de variables de fonctions respective, et ce avec pré-distorsion des symboles dépendante d'un inverse de la quantité de l'influence de canal, mais de manière indépendante d'une phase de l'influence de canal, et de sorte qu'une puissance de transmission de la séquence de symboles dépende de la valeur de variables de fonctions, et ce de manière chevauchante dans le temps, de sorte que soit obtenue, en raison d'une propriété de somme du canal à accès multiples sans fil, une totalisation des séquences de symboles des émetteurs de la pluralité d'émetteurs de valeurs de variables de fonctions à un récepteur du récepteur de fonctions (32).

7. Pluralité d'émetteurs de valeurs de variables de fonctions selon la revendication 5 ou 6, dans laquelle chaque émetteur de valeurs de variables de fonctions est conçu pour détecter une valeur de mesure physique et la fournir comme valeur de variables de fonctions respective.

8. Système avec
   une pluralité d'émetteurs de valeurs de variables de fonctions ($30_{1...K}$) selon la revendication 5; et
   un récepteur de fonctions (32) destiné à déterminer un résultat de fonction parmi la pluralité de valeurs de variables de fonctions de la pluralité d'émetteurs de valeurs de variables de fonctions ($30_{1...K}$), où le récepteur de fonctions (32) présente les caractéristiques suivantes:

   un récepteur ($34_1$) destiné à recevoir un premier signal de canal à accès multiples qui correspond à une superposition des signaux de puissance constante de la pluralité d'émetteurs de valeurs de variables de fonctions via le canal à accès multiples au récepteur, et un deuxième signal de canal à accès multiples qui correspond à une superposition de la pluralité de séquences de symboles de la pluralité d'émetteurs de valeurs de variables de fonctions;
   un estimateur de canal (90) destiné à détecter une puissance de réception du premier signal de canal à accès multiples dans un laps de temps pendant lequel les signaux à puissance constante se chevauchent, pour obtenir un moment statistique de deuxième ordre qui décrit le canal à accès multiples (31); et
   un déterminateur de résultat de fonction (58) destiné à déterminer le résultat de fonction sur base d'une puissance de réception du deuxième signal de canal à accès multiples et du moment statistique de deuxième ordre.

9. Système selon la revendication 8, dans lequel les émetteurs de valeurs de variables de fonctions sont conçus pour soumettre, dans la phase de fonctionnement normal, la valeur de variables de fonctions respective à un prétraitement (46) suivi d'une extraction de racine (50) pour obtenir la quantité des symboles de la séquence de symboles de l'émetteur de valeurs de variables de fonctions respectif, et le déterminateur de résultat de fonction (58) du récepteur de fonctions (32) est conçu pour soumettre la puissance de réception du deuxième signal de canal à accès multiples à un post-traitement (70), dans lequel les émetteurs de valeurs de variables de fonctions et le déterminateur de résultat de fonction (58) du récepteur de fonctions sont conçus de sorte que, de manière indépendante d'une variation dans le temps du canal à accès multiples (31) et pour toutes les valeurs possibles que peuvent adopter les valeurs de variables de fonctions, le résultat de fonction représente une valeur moyenne géométrique ou arithmétique des valeurs de variables de fonctions.

10. Système avec
    une pluralité d'émetteurs de valeurs de variables de fonctions ($30_{1...K}$) selon la revendication 6; et
    un récepteur de fonctions (32) destiné à déterminer un résultat de fonction parmi la pluralité de valeurs de variables de fonctions de la pluralité d'émetteurs de valeurs de variables de fonctions, où le récepteur de fonctions présente les caractéristiques suivantes:

    un récepteur ($34_1$) destiné à recevoir un signal de canal à accès multiples qui correspond à une totalisation de la pluralité de séquences de symboles de la pluralité d'émetteurs de valeurs de variables de fonctions via le canal à accès multiples (31) au récepteur; et
    un déterminateur de résultat de fonction (58) destiné à déterminer le résultat de fonction sur base d'une puissance de réception du signal de canal à accès multiples; et
    un émetteur pilote (56) destiné à transmettre le signal pilote.

11. Système selon la revendication 10, dans lequel les émetteurs des émetteurs de valeurs de variables de fonctions (40) sont conçus pour soumettre la valeur de variables de fonctions respective à un prétraitement (46) suivi d'une extraction de racine (50) et d'une multiplication par l'inverse de la quantité de l'influence de canal entre l'émetteur de valeurs de variables de fonctions respective et le récepteur de fonctions (32) pour pré-distorsionner les symboles de la séquence de symboles de l'émetteur de valeurs de variables de fonctions respectif pour obtenir la quantité des symboles de la séquence de symboles de l'émetteur de fonctions de variables de fonctions respectif, et le déterminateur de résultat de fonction (58) du récepteur de fonctions (32) est conçu pour soumettre la puissance de réception du signal de canal à accès multiples à un post-traitement (70), dans lequel l'émetteur (40) des émetteurs de valeurs de variables de fonctions et le déterminateur de résultat de fonction (58) du récepteur de fonctions sont conçus de sorte que, de manière indépendante d'une variation dans le temps du canal à accès multiples (31) et pour toutes les valeurs possibles que peuvent adopter les valeurs de variables de fonctions, le résultat de fonction représente une valeur moyenne géométrique ou arithmétique des valeurs de variables de fonctions.

12. Procédé de détermination d'un résultat de fonction parmi une pluralité de valeurs de variables de fonctions d'une pluralité d'émetteurs de valeurs de variables de fonctions ($30_{1...K}$) à un récepteur, avec le fait de
recevoir un premier signal de canal à accès multiples qui correspond, en raison d'une propriété de somme d'un canal à accès multiples sans fil, à la totalisation de signaux de puissance constante de la pluralité d'émetteurs de valeurs de variables de fonctions via un canal à accès multiples (31) au récepteur, dans une phase d'estimation de canal, et
recevoir un deuxième signal de canal à accès multiples qui correspond, en raison d'une propriété de somme d'un canal à accès multiples sans fil, à la totalisation d'une pluralité de séquences de symboles de la pluralité d'émetteurs de valeurs de variables de fonctions à phase variable de manière différente et aléatoire, pseudo-aléatoire ou déterministe avec une distribution uniforme pour la pluralité d'émetteurs de valeurs de variables de fonctions et avec une quantité qui est identique pour les symboles pour chacun des émetteurs de valeurs de variables de fonctions et qui dépend de la valeur de variables de fonctions respective de l'émetteur de valeurs de variables de fonctions respectif, via le canal à accès multiples (31) au récepteur, dans une phase de fonctionnement normal;
détecter une puissance de réception du premier signal de canal à accès multiples pendant un laps de temps pendant lequel les signaux à puissance constante se chevauchent, pour obtenir un moment statistique de deuxième ordre qui décrit le canal à accès multiples; et
déterminer le résultat de fonction sur base d'une puissance de réception du deuxième signal de canal à accès multiples et du moment statistique de deuxième ordre.

13. Procédé pour faire fonctionner une pluralité d'émetteurs de valeurs de variables de fonctions, dans lequel chaque émetteur de valeurs de variables de fonctions est conçu pour transmettre une valeur de variables de fonctions ensemble avec d'autres valeurs de variables de fonctions des autres émetteurs de valeurs de variables de fonctions de la pluralité d'émetteurs de valeurs de variables de fonctions via un canal à accès multiples sans fil (31) à un récepteur de fonctions (32), avec le fait de
dans une phase d'estimation de canal, transmettre avec chevauchement dans le temps un signal de puissance constante de chaque émetteur de valeurs de variables de fonctions, de sorte que soit obtenue, en raison d'une propriété de somme du canal à accès multiples, une totalisation des signaux de puissance constante à un récepteur du récepteur de fonctions (32); et
dans une phase de fonctionnement normal, transmettre de chaque émetteur de valeurs de variables de fonctions, une séquence de symboles à phase variable de manière aléatoire dans le temps, variable de manière pseudo-aléatoire dans le temps ou variable de manière déterministe dans le temps avec une distribution uniforme et une quantité qui est identique pour les symboles d'un émetteur de valeurs de variables de fonctions respectif et qui dépend de la valeur de variables de fonctions respective, et ce sans pré-distorsion dépendante du canal, de sorte qu'une puissance de transmission de la séquence de symboles dépende de la valeur de variables de fonctions, et à chevauchement dans le temps, de sorte que soit obtenue, en raison d'une propriété de somme du canal à accès multiples, une totalisation des séquences de symboles au récepteur du récepteur de fonctions (32).

14. Procédé pour faire fonctionner une pluralité d'émetteurs de valeurs de variables de fonctions, dans lequel chaque émetteur de valeurs de variables de fonctions est conçu pour transmettre une valeur de variables de fonctions ensemble avec d'autres valeurs de variables de fonctions des autres émetteurs de valeurs de variables de fonctions de la pluralité d'émetteurs de valeurs de variables de fonctions via un canal à accès multiples sans fil (31) à un récepteur de fonctions (32), avec le fait de
estimer, par chaque émetteur de valeurs de variables de fonctions, une quantité d'une influence de canal entre l'émetteur de valeurs de variables de fonctions et le récepteur de fonctions (32) à partir d'un signal pilote transmis par le récepteur de fonctions (32); et
transmettre, par chaque émetteur de valeurs de variables de fonctions, une séquence de symboles à phase variable de manière aléatoire dans le temps, variable de manière pseudo-aléatoire dans le temps ou variable de manière déterministe dans le temps avec une distribution uniforme et une quantité qui est identique pour les symboles d'un émetteur de valeurs de variables de fonctions respectif et qui dépend de la valeur de variables de fonctions respective, et ce avec pré-distorsion des symboles en fonction d'un inverse de la quantité de l'influence de canal, mais de manière indépendante d'une phase de l'influence de canal, et de sorte qu'une puissance de transmission de la séquence de symboles dépende de la valeur de variables de fonctions, et ce avec chevauchement dans le temps, de sorte que soit obtenue, en raison d'une propriété de somme du canal à accès multiples, une totalisation des séquences de symboles des émetteurs de la pluralité d'émetteurs de valeurs de variables de fonctions à un récepteur du récepteur de fonctions (32).

**15.** Programme d'ordinateur avec un code de programme pour la mise en oeuvre du procédé selon la revendication 13 ou 14 lorsque le programme est exécuté sur un ordinateur.

FIG 1

FIG 2

FIG 3

EP 2 510 643 B1

FIG 4A

58

32

1/α

$\hat{f}$ ← g$^{-1}$ ← ψ ← ⊗ ← | Verar- beiter | ← | ‖·‖$^2$ | ← y(t)

62    72    70    68    66    64

34₁

| Pilot- sender |

56

FIG 4B

32

58

34₁

1/α

$\hat{f}$ ← | Verar- beiter | ← g$^{-1}$ ← ψ ← ⊗ ← | ‖·‖$^2$ | ← y(t)

62    66    72    70    68    64

| Pilot- sender |

56

FIG 4C

FIG 5A

EP 2 510 643 B1

FIG 5B

FIG 5C

FIG 6

K = 25, M = 15

FIG 7

K = 250, M = 150

CoMAC vs. TDMA

P(|E| ≥ e), e ≥ 0°C, "Arithmetischer Mittelwert" mit K=25

R=4 bit, SNR$_{dB}$ ∈ {2,4,6,8}

**FIG 8A**

R=8 bit, SNR$_{dB}$ ∈ {2,4,6,8}

**FIG 8B**

P($|E| \geq e$), $e \geq 0°C$, "Arithmetischer Mittelwert" mit K=250

R=6 bit, $SNR_{dB} \in \{2,4,6,8\}$

FIG 8C

R=8 bit, $SNR_{dB} \in \{2,4,6,8\}$

FIG 8D

EP 2 510 643 B1

P(|E| ≥ e), e ≥ 0°C, "Geometrischer Mittelwert" mit K=50

R=6 bit, SNR$_{dB}$ ∈ {2,4,6,8}

FIG 8E

R=8 bit, SNR$_{dB}$ ∈ {2,4,6,8}

FIG 8F

EP 2 510 643 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **B. NAZER ; M. GASTPAR.** Computation over multiple-access channels. *IEEE Trans. Inf. Theory,* Oktober 2007, vol. 53 (10), 3498-3516
- **M. GOLDENBAUM ; S. STANCZAK ; M. KALISZAN.** On function computation via wireless sensor multiple-access channels. *Proc. IEEE Wireless Communications & Networking Conference (WCNC),* April 2009
- Performance of Distributed Estimation Over Unknown Parallel Fading Channels. **HABIB SENOL et al.** IEEE TRANSACTIONS ON SIGNAL PROCESSING. IEEE SERVICE CENTER, 01. Dezember 2008, vol. 55